(19) Europäisches Patentamt / European Patent Office / Office européen des brevets

(11) **EP 4 488 016 A1**

(12) **EUROPEAN PATENT APPLICATION**
published in accordance with Art. 153(4) EPC

(43) Date of publication:
**08.01.2025 Bulletin 2025/02**

(21) Application number: **22929722.1**

(22) Date of filing: **01.03.2022**

(51) International Patent Classification (IPC):
**B25J 13/00** (2006.01)   **G06N 20/00** (2019.01)

(52) Cooperative Patent Classification (CPC):
**B25J 13/00; G06N 20/00**

(86) International application number:
**PCT/JP2022/008700**

(87) International publication number:
**WO 2023/166574 (07.09.2023 Gazette 2023/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventors:
• **OYAMA, Hiroyuki**
  **Tokyo 108-8001 (JP)**
• **TAKANO, Rin**
  **Tokyo 108-8001 (JP)**

(74) Representative: **Betten & Resch
Patent- und Rechtsanwälte PartGmbB
Maximiliansplatz 14
80333 München (DE)**

(54) **LEARNING DEVICE, CONTROL DEVICE, LEARNING METHOD, AND STORAGE MEDIUM**

(57)    A learning device includes: a search point setting means for selecting, from among search points indicating an operation of a control target, a search point to be subjected to training data acquisition for learning of a control of the control target; a calculation means for calculating information indicating an evaluation of whether or not an operation indicated by the selected search point is executable, and an output value for the operation indicated by the selected search point to be output by a control means for controlling the control target; a data acquisition means for acquiring, based on the selected search point, the information indicating the evaluation of whether or not the operation indicated by the selected search point is executable, and the output value for the operation indicated by the selected search point to be output by the control means, training data for learning a control of the control target that is performed by the control means; and an evaluation means for determining, based on an evaluation of an acquisition status of the training data, whether or not to continue acquiring the training data.

FIG. 10

**Description**

TECHNICAL FIELD

The present invention relates to a learning device, a control device, a learning method, and a recording medium.

BACKGROUND ART

A system has been proposed that, in a case of performing a control of a robot that is necessary for executing a task, performs the control of the robot by providing a skill in which the operation of the robot has been modularized. For example, in Patent Document 1, a technique is disclosed where, in a system in which an articulated robot executes a given task, the skills of the robot that can be selected according to a task are defined as a tuple, and the parameters included in the tuple are updated by learning.

Prior Art Documents

Patent Documents

Patent Document 1: PCT International Publication No. WO2018/219943

SUMMARY OF THE INVENTION

Problems to be Solved by the Invention

When learning a control of a control target, such as learning a skill of a robot, if it is possible to determine whether or not it is necessary to continue the learning, it is expected that unnecessary learning can be eliminated, and the learning can be performed efficiently.
An example object of the present disclosure is to provide a learning device, a control device, a learning method, and a recording medium that are capable of solving the above problem.

Means for Solving the Problem

According to a first example aspect of the present invention, a learning device includes: a search point setting means for selecting, from among search points indicating an operation of a control target, a search point to be subjected to training data acquisition for learning of a control of the control target; a calculation means for calculating information indicating an evaluation of whether or not an operation indicated by the selected search point is executable, and an output value for the operation indicated by the selected search point to be output by a control means for controlling the control target; a data acquisition means for acquiring, based on the selected search point, the information indicating the evaluation of whether or not the operation indicated by the selected search point is executable, and the output value for the operation indicated by the selected search point to be output by the control means, training data for learning a control of the control target that is performed by the control means; and an evaluation means for determining, based on an evaluation of an acquisition status of the training data, whether or not to continue acquiring the training data.
According to a second example aspect of the present invention, a control device includes: a control means that performs a control of a robot according to a shape of a gripping target object, such that gripping target objects having different sizes are each gripped by the robot.
According to a third example aspect of the present invention, a learning method is executed by a computer and includes: selecting, from among search points indicating an operation of a control target, a search point to be subjected to training data acquisition for learning of a control of the control target; calculating information indicating an evaluation of whether or not an operation indicated by the selected search point is executable, and an output value for the operation indicated by the selected search point to be output by a control means for controlling the control target; acquiring, based on the selected search point, the information indicating the evaluation of whether or not the operation indicated by the selected search point is executable, and the output value for the operation indicated by the selected search point to be output by the control means, training data for learning a control of the control target that is performed by the control means; and determining, based on an evaluation of an acquisition status of the training data, whether or not to continue acquiring the training data.
According to a fourth example aspect of the present invention, a recording medium stores a program that causes a computer to execute: selecting, from among search points indicating an operation of a control target, a search point to be subjected to training data acquisition for learning of a control of the control target; calculating information indicating an evaluation of whether or not an operation indicated by the selected search point is executable, and an output value for the operation indicated by the selected search point to be output by a control means for controlling the control target; acquiring, based on the selected search point, the information indicating the evaluation of whether or not the operation indicated by the selected search point is executable, and the output value for the operation indicated by the selected search point to be output by the control means, training data for learning a control of the control target that is performed by the control means; and determining, based on an evaluation of an acquisition status of the training data, whether or not to continue acquiring the training data.

Effect of Invention

According to the present invention, if it is possible to determine whether or not it is necessary to continue the learning when learning a control of a control target, it is expected that the learning can be performed efficiently.

BRIEF DESCRIPTION OF THE DRAWINGS

[FIG. 1] FIG. 1 is a diagram showing an example of a configuration of a control system according to a first example embodiment.
[FIG. 2] FIG. 2 is a diagram showing an example of a known task parameter according to the first example embodiment.
[FIG. 3] FIG. 3 is a diagram showing an example of an unknown task parameter according to the first example embodiment.
[FIG. 4] FIG. 4 is a diagram showing an example of a hardware configuration of a learning device according to the first example embodiment.
[FIG. 5] FIG. 5 is a diagram showing an example of a hardware configuration of a robot controller according to the first example embodiment.
[FIG. 6] FIG. 6 is a diagram illustrating a robot that grips an object according to the first example embodiment, and a gripping target object in real space.
[FIG. 7] FIG. 7 is a diagram illustrating the state shown in FIG. 6 in an abstract space.
[FIG. 8] FIG. 8 is a diagram showing an example of a configuration of a control system relating to execution of a skill according to the first example embodiment.
[FIG. 9] FIG. 9 is a diagram showing an example of a functional configuration of the learning device relating to updating a skill database according to the first example embodiment.
[FIG. 10] FIG. 10 is a diagram showing an example of a configuration of a skill learning unit according to the first example embodiment.
[FIG. 11] FIG. 11 is a diagram showing an example of data input and output in the skill learning unit according to the first example embodiment.
[FIG. 12] FIG. 12 is a diagram showing an example of update processing of a skill database performed by the learning device according to the first example embodiment.
[FIG. 13] FIG. 13 is a diagram showing an example of data input and output in a skill learning unit according to a second example embodiment.
[FIG. 14] FIG. 14 is a diagram showing an example of update processing of a skill database performed by a learning device according to the second example embodiment.
[FIG. 15] FIG. 15 is a diagram showing an example of a configuration of a skill learning unit according to a third example embodiment.
[FIG. 16] FIG. 16 is a diagram showing an example of data input and output in the skill learning unit according to the third example embodiment.
[FIG. 17] FIG. 17 is a diagram showing an example of a configuration of a meta parameter processing unit according to the third example embodiment.
[FIG. 18] FIG. 18 is a diagram showing an example of data input and output in the meta parameter processing unit according to the third example embodiment.
[FIG. 19] FIG. 19 is a diagram showing a first example of a configuration of a meta parameter individual processing unit according to the third example embodiment.
[FIG. 20] FIG. 20 is a diagram showing an example of data input and output in the meta parameter individual processing unit shown in FIG. 19.
[FIG. 21] FIG. 21 is a diagram showing a second example of a configuration of the meta parameter individual processing unit according to the third example embodiment.

[FIG. 22] FIG. 22 is a diagram showing an example of data input and output in the meta parameter individual processing unit shown in FIG. 21.

[FIG. 23] FIG. 23 is a diagram showing an example of update processing of a skill database performed by a learning device according to the third example embodiment.

[FIG. 24] FIG. 24 is a diagram showing an example of the processing by which a meta parameter processing unit according to the third example embodiment calculates a meta parameter value of a predictor.

[FIG. 25] FIG. 25 is a diagram showing a first example of the processing by which the meta parameter individual processing unit according to the third example embodiment calculates a meta parameter value for each predictor, and determines whether or not it is necessary to continue the learning of the meta parameter value.

[FIG. 26] FIG. 26 is a diagram showing a second example of the processing by which the meta parameter individual processing unit according to the third example embodiment calculates a meta parameter value for each predictor, and determines whether or not it is necessary to continue the learning of the meta parameter value.

[FIG. 27] FIG. 27 is a diagram showing an example of a configuration of a learning device according to a fourth example embodiment.

[FIG. 28] FIG. 28 is a diagram showing an example of a configuration of a control device according to a fifth example embodiment.

[FIG. 29] FIG. 29 is a diagram showing an example of the processing procedure of a learning method according to a sixth example embodiment.

EXAMPLE EMBODIMENT

Hereunder, example embodiments of the present embodiment will be described. However, the following example embodiments do not limit the invention according to the claims. Furthermore, not all combinations of features described in the example embodiments are essential to the solution means of the invention. Note that, for convenience, a character in which an arbitrary symbol "x" is added above an arbitrary character "A" is written as "A$^x$" in the present specification.

<First example embodiment>

(1) System Configuration

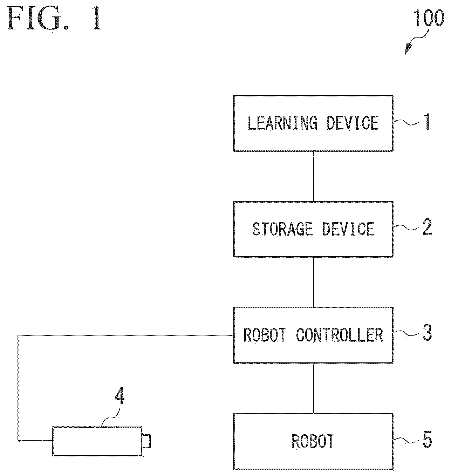

FIG. 1 is a diagram showing an example of a configuration of a control system according to a first example embodiment. In the configuration shown in FIG. 1, the control system 100 includes a learning device 1, a storage device 2, a robot controller 3, a measurement device 4, and a robot 5. The learning device 1 performs data communication with the storage device 2 via a communication network or by direct wireless or wired communication. Furthermore, the robot controller 3 performs data communication with the storage device 2, the measurement device 4, and the robot 5 via a communication network or by direct wireless or wired communication.

The learning device 1 learns the operations of the robot 5 for executing a given task by, for example, machine learning such as self-supervised learning (SSL). Moreover, the learning device 1 learns a set of states in which the operations that are learned can be executed.

However, the target of the operations that are learned by the learning device 1 is not limited to a specific target, and can be various control targets that can be controlled and whose control can be learned. Furthermore, the operations of a control target such as the robot 5 are not limited to operations that involve a change in position. For example, an operation in which the robot 5 uses a sensor to acquire sensor measurement data may be set as one of the operations of the robot 5.

The same applies to the example embodiments below.

The state referred to here is the state of a target system that includes the robot 5 and an operating environment of the robot 5.

The robot 5 and the operating environment of the robot 5 are collectively referred to as a target system, or simply a system. In a case where a task involves handling a target object, such as a task of gripping an object, it is assumed that the target object of the task is also included in the target system.

The state of the target system is referred to as a system state, or simply a state. The system state at the time of task completion that is defined for a task is also referred to as a target state of the task, or simply a target state. Reaching the target state of a task is also referred to as accomplishing the task, or succeeding at the task.

In a case where a task is accomplished by executing a skill, the state at the completion of skill execution corresponds to the target state.

The system state at the start of a task is also referred to as an initial state of the task.

The learning device 1 performs learning relating to a skill in which specific operations of the robot 5 are modularized for each operation. In the example embodiments, it is assumed that a task can be accomplished by executing a single skill with respect to a single task, and an example will be described in which the learning device 1 learns a skill to accomplish a task.

On the other hand, the robot controller 3 may combine a plurality of skills to execute a task. For example, the robot controller 3 may plan the execution of a given task by dividing the given task into subtasks each corresponding to a skill, and then combine the skills used to execute each of the subtasks.

In the learning relating to a skill, the learning device 1 also learns a set of states in which the skill can be executed. The learning device 1 registers information relating to skills that have been learned in a skill database stored in the storage device 2. The information registered in the skill database is also referred to as a skill tuple. The skill tuple includes various information necessary to execute an operation that is to be modularized. The learning device 1 generates the skill tuple based on detailed system model information, low-level controller information, and target parameter information stored in the storage device 2.

The storage device 2 stores information that is referenced by the learning device 1 and the robot controller 3. The storage device 2 stores, for example, detailed system model information, low-level controller information, target parameter information, and the skill database. The storage device 2 may be an external storage device such as a hard disk that is connected to, or built into, the learning device 1 or the robot controller 3, a storage medium such as a flash memory, or a server device or the like that performs data communication with the learning device 1 and the robot controller 3. Furthermore, the storage device 2 may be configured by a plurality of storage devices, and each of the storage units described above may be held in a distributed manner.

The detailed system model information is information representing a model of the target system in real space. A model of the target system in real space is also called a detailed system model. Such a model is referred to as a "detailed" system model in order to make a distinction with an "abstract" system model, which is an abstraction of the detailed system model.

The detailed system model information may be expressed as differential or difference equations representing the detailed system model. Alternatively, the detailed system model may be configured as a simulator that simulates the operation of the robot 5.

The low-level controller information is information relating to a low-level controller that generates an input to control the actual operation of the robot 5 based on parameter values output by a high-level controller. For example, in a case where the high-level controller generates a trajectory of the robot 5, the low-level controller may generate a control input that follows the operation of the robot 5 according to the trajectory. For example, the low-level controller may control the robot 5 by a servo control using a PID (proportional integral differential) based on parameters that are output from the high-level controller.

The target parameter information is provided for each skill learned by the learning device 1, and includes, for example, initial state information, target state/known task parameter information, unknown task parameter information, execution time information, and general constraint information.

Here, the variable parts of a task are referred to as the task parameters.

Among the task parameters, those expressed by numerical values are referred to as known task parameters. Examples of known task parameters include the size of the target object in the task, such as the size of the gripping target object in a case where the task is to grip the target object, and the trajectory of the robot 5 for executing the task. However, it is not limited to this.

The known task parameters can also be treated as parameters in a skill. A known task parameter corresponds to an example of a skill parameter.

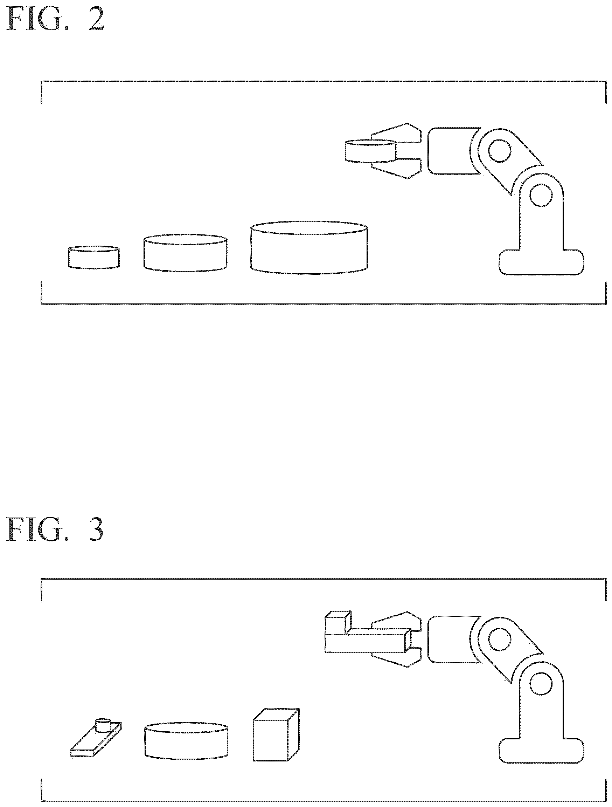

FIG. 2 is a diagram showing an example of a known task parameter. FIG. 2 shows a case where the robot 5 executes the task of gripping target objects having a cylindrical shape. In this case, the radius and height of the cylinders representing the target objects correspond to examples of a known task parameter.

On the other hand, among the task parameters, those that are difficult to express as a numerical value are referred to as unknown task parameters. Examples of unknown task parameters include the shape of the target object in the task, such as the shape of the gripping target object in a case where the task is to grip the target object, and the type of operation performed by the robot 5 to execute the task, such as the skill required to execute the task. However, it is not limited to this.

FIG. 3 is a diagram showing an example of an unknown task parameter. FIG. 3 shows a case where the robot 5 executes the task of gripping target objects having a variety of shapes. In this case, the shapes of the target objects correspond to examples of an unknown task parameter.

Furthermore, it is assumed that the control system 100 handles the system state in a numerical form, and the target state is expressed as a numerical value. For example, in the case of a task in which the robot 5 performs pick and place, the target state may be expressed by the coordinates of the target object being within a predetermined range.

The initial state information is information indicating a set of states in which the target skill can be executed. The state at the start of execution of a skill is also referred to as an initial state of the skill, or simply an initial state. A set of initial states is also referred to as an initial state set.

The initial state is represented by $x_s$ or $x_{si}$. Here, "i" is a positive integer representing an identification number that identifies the initial state. In addition, the time of the initial state is 0, and the initial state is sometimes expressed as $x_0$.

The target state/known task parameter information is information representing a set of combinations of the possible values of the target state, which is a state that can be reached by executing the target skill, and the possible values of the known task parameter, which is treated as an explicit parameter of the target skill. For example, in the case of a skill in which the robot 5 grips a target object, the target state may include, as possible values, information relating to stable gripping conditions such as a form closure or a force closure.

A combination of a target state and a known task parameter value is referred to as a target state/known task parameter value, and is represented by $\beta_g$ or $\beta_{gi}$. Here, "i" is a positive integer representing an identification number that identifies the target state/known task parameter value.

As a result of treating differences in the target state and differences in the known task parameter value of the skill as the parameters of the skill, tasks having different target states and/or known task parameter values can be executed with a single skill.

For example, in a case where the learning device 1 performs processing relating to learning a skill using a predictor, it is possible to input a target state and a known task parameter value to the predictor, and obtain an output value corresponding to the target state and the known task parameter value. Here, the predictor is configured using a learning model (machine learning model), such as a neural network or a Gaussian process.

In some cases, there may be no known task parameters depending on the skill. In this case, the target state/known task parameter information may be configured as a set of possible values of the target state. Furthermore, the target state/known task parameter value $\beta_g$ may represent the target state.

The unknown task parameter information is information relating to an unknown task parameter. For example, as described below in a third example embodiment, a probability distribution of data relating to the unknown parameter may be represented in the unknown task parameter information. In a case where a single skill has a plurality of unknown task parameters, information relating to each unknown task parameter may be represented in the unknown task parameter information.

In the first example embodiment and the second example embodiment, the handling of the target state/known task parameter information will be described. In the first example embodiment and the second example embodiment, the value corresponding to an unknown task parameter may be represented by a fixed value.

An unknown task parameter value is represented by $\tau$ or $\tau_j$. Here, "j" is a positive integer representing an identification number that identifies the unknown task parameter value.

It is assumed that although it is difficult to express an unknown parameter with a numerical value because it is difficult to systematically quantify the value, it is possible to determine whether or not unknown parameter values are the same. For example, in a case where an unknown parameter represents the shape of a target object, it is assumed that it is possible to determine whether or not the unknown parameter values are the same by comparing the shapes of two target objects.

If the unknown task parameter values of two tasks are the same, the control system 100 treats the two tasks as the same task. If the unknown task parameter values are different, the control system 100 treats the two tasks as separate tasks. A task may be expressed by $\tau$ or $\tau_j$. The "j" mentioned above can also be interpreted as a positive integer representing an identification number that identifies a task.

The execution time information is information relating to a time limit when executing a skill. For example, the execution time information may indicate the execution time of the skill (the time taken to execute the skill), an allowed condition value for the time from the start to the completion of skill execution, or both.

The general constraint information is information indicating the general constraint conditions, such as conditions relating to limits on the range of motion, limits on the speed, and limits on the inputs to the robot 5.

The skill database is a database of skill tuples prepared for each skill. A skill tuple may include information relating to a high-level controller for executing the target skill, information relating to a low-level controller for executing the target skill, and information relating to a set of combinations of states (initial states of the skill) and target state/known task parameter values in which the target skill can be executed. The set of states and target state/known task parameter values in which the skill can be executed is also referred to as an executable state set.

The executable state set may be defined in an abstract space, which is an abstraction of an actual space. The executable state set can be represented by a Gaussian process regression (GPR), a level set function estimated by a level set estimation (LSE), or an approximation function of a level set function. In other words, it can be determined whether or not the executable state set includes a certain combination of a state and a target state/known task parameter value based on, whether or not the value (such as an average value) of a Gaussian process regression for the certain combination of the state and the target state/known task parameter value, or the value of an approximation function for the certain combination of the state and the target state/known task parameter value, satisfies a constraint condition that determines the executability.

In the following, an example will be described in which a level set function is used as the function representing the executable state set. However, it is not limited to this.

After the learning processing is performed by the learning device 1, the robot controller 3 formulates an operation plan of the robot 5 based on a measurement signal supplied by the measurement device 4, the skill database, and the like. The robot controller 3 generates a control command (control input) for causing the robot 5 to execute the planned operation, and supplies the control command to the robot 5.

For example, the robot controller 3 converts a task to be executed by the robot 5 into a sequence of tasks that can be accepted by the robot 5 at each time step (time interval). Then, the robot controller 3 controls the robot 5 based on control commands corresponding to the execution commands of the generated sequence. The control commands correspond to the control inputs that are output by the low-level controller.

For example, the measurement device 4 represents one or more sensors, such as a camera, a range sensor, a sonar, or a combination thereof, that detects the state within a workspace in which the robot 5 executes tasks. The measurement device 4 supplies the measurement signals that have been generated, to the robot controller 3. The measurement device 4 may be a self-propelled or flying sensor (including a drone) that moves within the workspace. Furthermore, the measurement device 4 may include a sensor provided on the robot 5, a sensor provided on another object within the workspace, and the like. Moreover, the measurement device 4 may include a sensor that detects sounds within the workspace. In this way, the measurement device 4 is a variety of sensors that detect the state within the workspace, and may include sensors provided at arbitrary locations.

The robot 5 performs work relating to tasks that has been specified based on the control commands supplied from the robot controller 3. The robot 5 is a robot that operates, for example, in various factories such as an assembly factory or a food factory, or at a distribution site. The robot 5 may be a vertically articulated robot, a horizontally articulated robot, or any other type of robot. The robot 5 may supply a state signal indicating the state of the robot 5, to the robot controller 3. The state signal may be an output signal of a sensor that detects the state (such as the position or angle) of the entire robot 5 or of a specific part such as a joint, or may be a signal that indicates a progress state of the operation of the robot 5.

The configuration of the control system 100 shown in FIG. 1 is an example, and various changes may be made to the configuration. For example, the robot controller 3 and the robot 5 may be integrally configured. As another example, at least any two of the learning device 1, the storage device 2, and the robot controller 3 may be integrally configured.

Furthermore, the control target of the control system 100 is not limited to being a robot. Various control targets in which a control can be learned by the learning device 1 can serve as the control target of the control system 100.

(2) Hardware Configuration

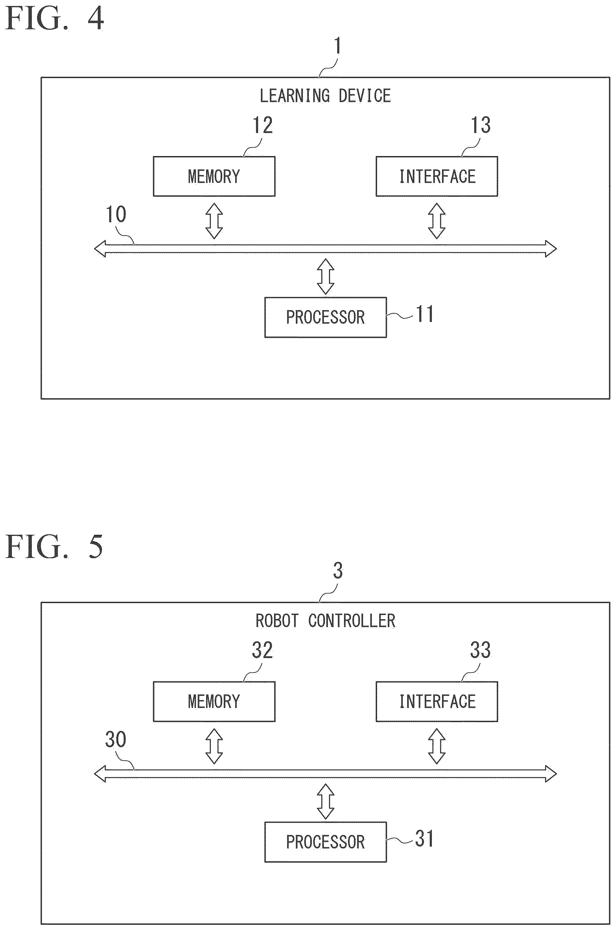

FIG. 4 is a diagram showing an example of the hardware configuration of the learning device 1. The learning device 1 includes, as hardware, a processor 11, a memory 12, and an interface 13. The processor 11, the memory 12, and the interface 13 are connected via a data bus 10.

The processor 11 functions as a controller (arithmetic device) that controls the entire learning device 1 by executing a program stored in the memory 12. The processor 11 is, for example, a processor such as a CPU (central processing unit), a GPU (graphics processing unit), or a TPU (tensor processing unit). The processor 11 may be configured by a plurality of processors. The processor 11 corresponds to an example of a computer.

The memory 12 is configured by various types of volatile memory and non-volatile memory, such as a RAM (random access memory), a ROM (read only memory), and a flash memory. Furthermore, the memory 12 stores a program for executing the processing executed by the learning device 1. A portion of the information stored in the memory 12 may be stored in one or more external storage devices (for example, the storage device 2) that are capable of communicating with the learning device 1, or may be stored on a recording medium that is detachable from the learning device 1.

The interface 13 is an interface for electrically connecting the learning device 1 and other devices. The interface may be a wireless interface such as a network adapter for wirelessly transmitting and receiving data with respect to the other devices, or may be a hardware interface for connecting to the other devices via a cable or the like. For example, the interface 13 may perform interface operations with input devices that accept user input (external input), such as a touch panel, a button, a keyboard, or a voice input device, or display devices such as a display or projector, and sound output devices such as a speaker.

The hardware configuration of the learning device 1 is not limited to the configuration shown in FIG. 4. For example, at least one of a display device, an input device, and a sound output device may be built into the learning device 1. Further, the learning device 1 may be configured to include the storage device 2.

FIG. 5 is a diagram showing a hardware configuration of the robot controller 3. The robot controller 3 includes, as hardware, a processor 31, a memory 32, and an interface 33. The processor 31, the memory 32, and the interface 33 are connected via a data bus 30.

The processor 31 functions as a controller (arithmetic device) that controls the entire robot controller 3 by executing a program stored in the memory 32. The processor 31 is, for example, a CPU, a GPU, or a TPU. The processor 31 may be configured by a plurality of processors.

The memory 32 is configured by various types of volatile memory and non-volatile memory, such as a RAM, a ROM, and a flash memory. Furthermore, the memory 32 stores a program for executing the processing executed by the robot controller 3. A portion of the information stored in the memory 32 may be stored in one or more external storage devices (for example, the storage device 2) that are capable of communicating with the robot controller 3, or may be stored on a recording medium that is detachable from the robot controller 3.

The interface 33 is an interface for electrically connecting the robot controller 3 and other devices. The interface may be a wireless interface such as a network adapter for wirelessly transmitting and receiving data with respect to the other devices, or may be a hardware interface for connecting to the other devices via a cable or the like.

The hardware configuration of the robot controller 3 is not limited to the configuration shown in FIG. 5. For example, at least one of a display device, an input device, and a sound output device may be built into the robot controller 3. Further, the robot controller 3 may be configured to include the storage device 2.

(3) Abstract Space

The robot controller 3 formulates an operation plan of the robot 5 in an abstract space based on a skill tuple. Therefore, the abstract space subjected to operation planning of the robot 5 will be described.

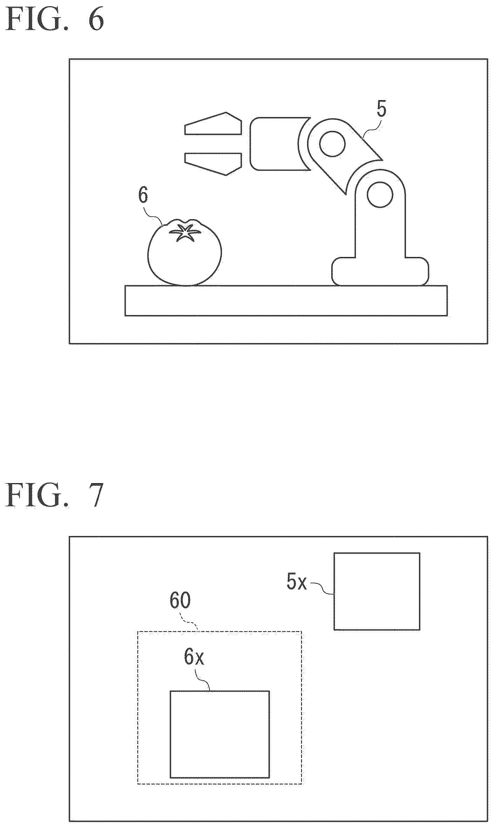

FIG. 6 is a diagram illustrating the robot (manipulator) 5 that grips an object, and the gripping target object 6 in real space.

FIG. 7 is a diagram illustrating the state shown in FIG. 6 in an abstract space.

Generally, formulating an operation plan of a robot 5 whose task is pick and place requires rigorous calculations that take into account the shape of an end effector of the robot 5, the geometric shape of the gripping target object 6, the gripping position and posture of the robot 5, the object characteristics of the gripping target object 6, and the like. On the other hand, in the present example embodiment, the robot controller 3 formulates an operation plan in an abstract space that abstractly (simply) represents the state of each object, such as the robot 5 and the gripping target object 6. In the example of FIG. 7, the abstract space defines an abstract model 5x corresponding to the end effector of the robot 5, an abstract model 6x corresponding to the gripping target object 6, and a gripping operation executable region (see dashed line frame 60) of the gripping target object 6 by the robot 5. In the abstract space, as described above, the executable state set is similarly represented as a set of combinations of the initial state and the target state/known task parameter value in which the skill can be executed. In the example of FIG. 7, the set of combinations of the initial state and the target state/known task parameter value in which the gripping skill can be executed is illustrated as the gripping operation executable region indicated by the dashed line frame 60.

In this way, the state of the robot in the abstract space abstractly represents the state of the end effector and the like. Furthermore, the state of each object corresponding to the operation target object and the environmental objects is also abstractly represented in a coordinate system or the like, which is based on a reference object such as a workbench.

The robot controller 3 according to the present example embodiment uses skills to formulate an operation plan in an abstract space, which is an abstraction of the actual system. As a result, the computational costs required for operation planning can be preferably suppressed, even for multi-stage tasks. In the example of FIG. 7, the robot controller 3 formulates an operation plan that executes the skills for executing gripping in a grippable region (dashed line frame 60) defined in the abstract space, and generates the control commands of the robot 5 based on the formulated operation plan.

In the following, the state of the system in real space is denoted by "x", the state of the system in an abstract space is denoted by "x'", and these are sometimes distinguished from each other. The state x' is represented as a vector (abstract state vector). For example, in the case of a task such as pick and place, the abstract state vector includes a vector representing the state of the operation target object (such as the position, the posture, and the speed), a vector representing the state of the end effector of the robot 5 that can be operated, and a vector representing the state of the environmental objects. In this way, the state x' is defined as a state vector that abstractly represents the state of some of the elements in the real system.

Similarly, the target state/known task parameter value in real space is denoted by "$\beta_g$", the target state/known task parameter value in an abstract space is denoted by "$\beta_g'$", and these are sometimes distinguished from each other.

(4) Control System Relating to Skill Execution

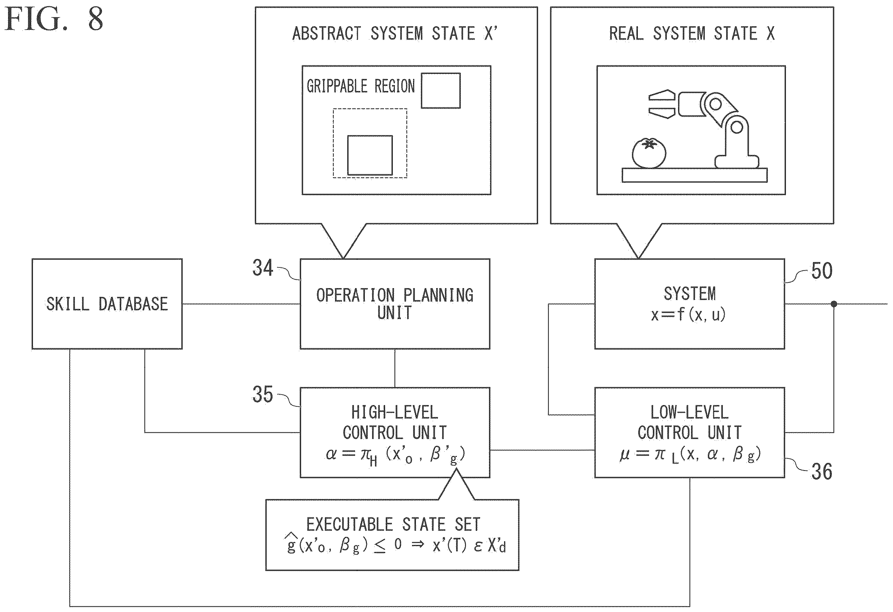

FIG. 8 is a diagram showing an example of the configuration of a control system relating to execution of a skill. The processor 31 of the robot controller 3 functionally includes an operation planning unit 34, a high-level control unit 35, and a low-level control unit 36. Furthermore, the system 50 corresponds to an actual system (a real system including the robot 5).

The high-level control unit 35 is also referred to as a high-level controller, and is represented by $\pi_{II}$. The high-level control unit 35 corresponds to an example of a control means. The low-level control unit 36 is also referred to as a low-level controller, and is represented by $\pi_L$.

The robot controller 3 corresponds to an example of a control device that controls the robot 5.

In addition, in FIG. 8, for convenience of the description, an inset showing the diagram illustrating the abstract space targeted by the operation planning unit 34 (see FIG. 7) is displayed in association with the operation planning unit 34, and an inset showing the diagram illustrating the real system corresponding to the system 50 (see FIG. 6) is displayed in association with the system 50. Similarly, in FIG. 8, an inset showing information relating to the executable state set of a skill is displayed in association with the high-level control unit 35.

The operation planning unit 34 formulates an operation plan of the robot 5 based on the state x' of the abstract system and the skill database. The operation planning unit 34, for example, expresses the target state by a logical expression based on temporal logic. The operation planning unit 34 may express the logical expression using any type of temporal logic, such as linear temporal logic, metric temporal logic (MTL), or signal temporal logic (STL).

The operation planning unit 34 converts the generated logical expression into a sequence (operation sequence) for each time step. The operation sequence includes, for example, information relating to the skill to be used at each time step.

The high-level control unit 35 recognizes the skill to be executed at each time step based on the operation sequence generated by the operation planning unit 34. Further, the high-level control unit 35 generates a parameter "$\alpha$", which becomes an input to the low-level control unit 36, based on the high-level controller "$\pi_H$" included in the skill tuple corresponding to the skill to be executed in the current time step.

The high-level control unit 35 generates the control parameter $\alpha$ as shown in expression (1) below when the combination of the state "$x_0$'" in the abstract space at the start of execution of the skill to be executed, and the target state/known task parameter value, belongs to the executable state set "$\chi_0$'" of the skill.
[Expression 1]

$$\alpha = \pi_H\left(x_0', \beta_g'\right) \qquad \cdots \ (1)$$

As mentioned above, the state at the start of execution of a skill is referred to as an initial state. The initial state is represented, for example, as a state in the abstract space.

Furthermore, in a case where an approximation function "$\hat{g}$" of a level set function is defined that can determine whether or not a state belongs to the executable state set $\chi_0$' of a skill, the robot controller 3 is capable of determining whether or not the state $x_0$' belongs to the executable state set $\chi_0$' by determining whether or not expression (2) is satisfied.
[Expression 2]

$$\hat{g}\left(x_0', \beta_g'\right) \leq 0 \qquad \cdots \ (2)$$

Expression (2) can also be said to represent a constraint condition that determines whether or not a skill is executable from a certain state. Alternatively, the approximation function "$\hat{g}$" can be said to be a model that can evaluate whether or not the target state can be reached from a certain initial state $x_0$' under a known task parameter value.

The approximation function $\hat{g}$ is obtained as a result of the learning device 1 performing learning, as described below.

A target state set, which is a set of target states in the abstract space after executing the target skill, is denoted as "$\chi_d'$", and the execution time of the target skill is denoted as "T". Furthermore, the state at a time point after a time T has elapsed from the start of skill execution is denoted as "x'(T)". As a result of executing a skill using the low-level control unit 36, expression (3) can be realized.
[Expression 3]

$$x'(T) \in \chi_d' \qquad \cdots \ (3)$$

The low-level control unit 36 generates an input "u" based on the control parameter $\alpha$ generated by the high-level control unit 35, and the state x of the real system and the target state/known task parameter value $\beta_g$ obtained from the system 50. The low-level control unit 36 generates the input u as shown in expression (4) as a control command based on the low-level controller "$\pi_L$" included in the skill tuple.
[Expression 4]

$$u = \pi_L\left(x, \alpha, \beta_g\right) \qquad \cdots \ (4)$$

The low-level controller $\pi_L$ is not limited to the format of the expression above, and may be a controller having various formats.

The low-level control unit 36 acquires, as the state x, the state of the robot 5 and the environment recognized using any type of state recognition technique based on measurement signals output by the measurement device 4 (which may include signals from the robot 5).

In FIG. 8, the system 50 is represented by the state equation shown in expression (5), which uses a function "f" that takes the input u to the robot 5 and the state x as arguments.

[Expression 5]

$$\dot{x} = f(x, u) \qquad \cdots (5)$$

The operator "·" represents differentiation with respect to time, or a difference with respect to time.

(5) Overview of Updating of Skill Database

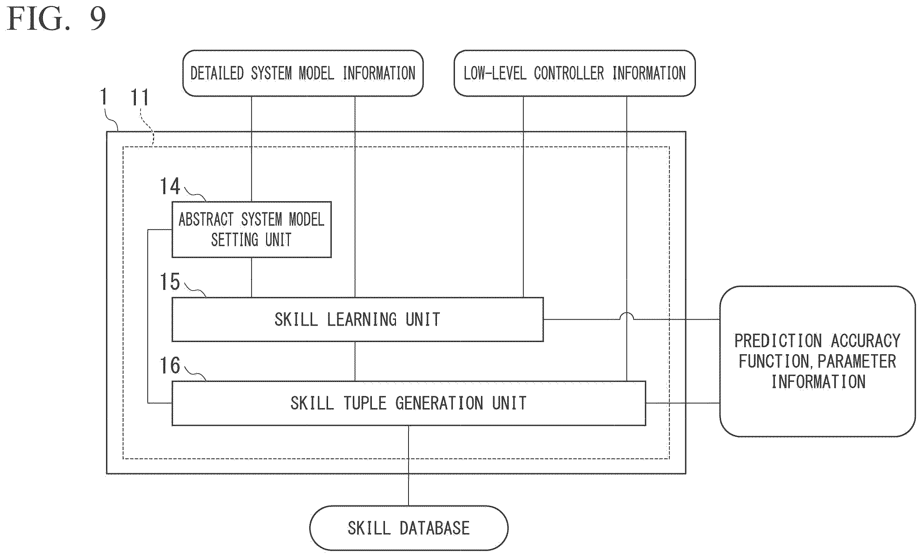

FIG. 9 is a diagram showing an example of a functional configuration of the learning device 1 relating to updating a skill database. The processor 11 of the learning device 1 functionally includes an abstract system model setting unit 14, a skill learning unit 15, and a skill tuple generation unit 16. In FIG. 9, an example of data exchanged in each block is shown. However, it is not limited to this. The same applies to the other diagrams.

The abstract system model setting unit 14 sets an abstract system model based on the detailed system model information. The abstract system model is a simplified model of the detailed system model specified by the detailed system model information. The detailed system model is a model corresponding to the system 50 in FIG. 8.

The abstract system model is a model having, as the state, an abstract state vector x' that is constructed based on the state x of the detailed system model. The operation planning unit 34 formulates the operation plan using the abstract system model.

The abstract system model setting unit 14 calculates the abstract system model from the detailed system model based on, for example, an algorithm stored in advance in the storage device 2 or the like.

Alternatively, information relating to the abstract system model may be stored in advance in the storage device 2 or the like. In this case, the abstract system model setting unit 14 may acquire the information relating to the abstract system model from the storage device 2 or the like. The abstract system model setting unit 14 supplies information relating to the abstract system model that has been set, to the skill learning unit 15 and the skill tuple generation unit 16.

The skill learning unit 15 learns a control of a skill execution based on, the abstract system model that has been set by the abstract system model setting unit 14, and the detailed system model information, the low-level controller information, and the target parameter information stored by the storage device 2. In particular, the skill learning unit 15 learns the value of the control parameter $\alpha$ of the low-level controller $\pi_L$ that is output by the high-level controller $\pi_H$. Furthermore, the skill learning unit 15 trains the level set function and acquires training data for training the control parameter $\alpha$, for example, by using an evaluation function that evaluates the prediction accuracy of the level set function.

The skill tuple generation unit 16 generates, as a skill tuple, a set (tuple) including information relating to the executable state set $\chi_0$' that has been learned by the skill learning unit 15, information relating to the high-level controller $\pi_{II}$, information relating to the abstract system model that has been set by the abstract system model setting unit 14, the low-level controller information, and the target parameter information. Then, the skill tuple generation unit 16 registers the generated skill tuple in the skill database. The data in the skill database is used by the robot controller 3 to control the robot 5.

Each component, namely the abstract system model setting unit 14, the skill learning unit 15, and the skill tuple generation unit 16, can be realized, for example, as a result of the processor 11 executing programs. Furthermore, the necessary programs may be recorded on any type of non-volatile storage medium, and installed as necessary to realize each component. At least a portion of each components may be realized not only by software realized by a program, but also by a combination of any of hardware, firmware, software, and the like. Moreover, at least a portion of each component may be realized using a user-programmable integrated circuit, such as an FPGA (field-programmable gate array) or a microcontroller. In this case, the integrated circuit may be used to realize a program configured by each component described above. In addition, at least a portion of each component may be configured using an ASSP (application specific standard produce), an ASIC (application specific integrated circuit), or a quantum computer control chip. In this way, each component may be realized by various types of hardware. The above also applies to the other example embodiments described below. In addition, each component may be realized by the cooperation of a plurality of computers using, for example, a cloud computing technique.

(6) Description of Skill Learning Unit

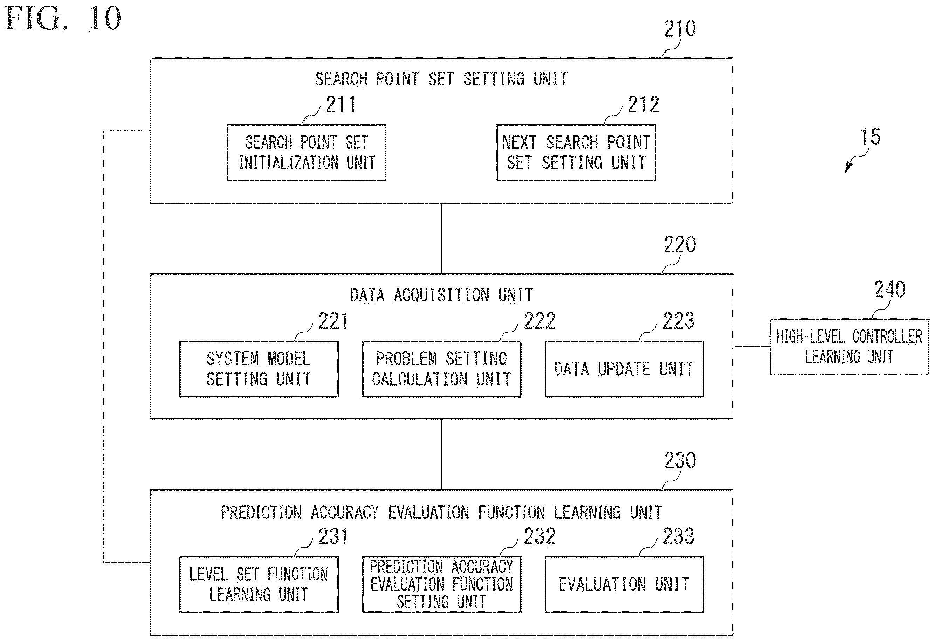

FIG. 10 is a diagram showing an example of a configuration of the skill learning unit 15 according to the first example embodiment. The skill learning unit 15 functionally includes a search point set setting unit 210, a data acquisition unit 220, a prediction accuracy evaluation function learning unit 230, and a high-level controller learning unit 240.

The search point set setting unit 210 includes a search point set initialization unit 211 and a next search point set setting unit 212.

The data acquisition unit 220 includes a system model setting unit 221, a problem setting calculation unit 222, and a data update unit 223.

The prediction accuracy evaluation function learning unit 230 includes a level set function learning unit 231, a prediction accuracy evaluation function setting unit 232, and an evaluation unit 233.

As described above, the skill learning unit 15 generates training data for training the high-level controller $\pi_H$, and uses the generated training data to perform the learning of the high-level controller $\pi_H$. Furthermore, the skill learning unit 15 trains the level set function.

The search point set setting unit 210 prepares a plurality of combinations of the initial state $x_s$ and the target state/known task parameter value $\beta_g$ as candidates of a task setting subjected to learning by the high-level controller $\pi_H$. The search point set setting unit 210 selects, from among the plurality of prepared candidates, the task setting subjected to training data acquisition for the robot controller 3 to learn the control of the robot 5.

The search point set setting unit 210 corresponds to an example of a search point setting means.

The search point set initialization unit 211 sets a set of candidates of the task setting, which is subjected to the learning of the high-level controller $\pi_H$ and the level set function. Specifically, the search point set initialization unit 211 sets a set consisting of combinations of the initial state $x_s$ and the target state/known task parameter value $\beta_g$ as elements.

The set of candidates of the task setting, which is subjected to the training of the high-level controller $\pi_H$, that is set by the search point set initialization unit 211 is referred to as a search point set, and is represented by $\tilde{X}_{search}$. Furthermore, a candidate of the task setting is also referred to as a search point. The search point can be represented by $(x_s, \beta_g)$.

Once a search point $(x_s, \beta_g)$ is determined, the task setting is determined, and the operation of the robot 5 is determined. The search point $(x_s, \beta_g)$ can be said to represent the operation of the robot 5 for each task.

The next search point set setting unit 212 extracts a subset from the search point set $\tilde{X}_{search}$. Each element of the subset extracted by the next search point set setting unit 212 is treated as a task setting, which is subjected to the learning of the high-level controller $\pi_H$.

The subset extracted from the search point set $\tilde{X}_{search}$ by the next search point set setting unit 212 is referred to as a search point subset, and is represented by $\bar{X}_{check}$.

The elements of the search point subset $\tilde{X}_{check}$ are represented by $\tilde{X}$ or $\tilde{X}_i$. Here, "i" is a positive integer representing an identification number that identifies an element in the search point subset.

The elements of the search point subset $\tilde{X}_{check}$ are referred to as selected search points, or simply search points.

The data acquisition unit 220 acquires training data for the training of the high-level controller $\pi_H$ for each element $\tilde{X}$ of the search point subset $\tilde{X}_{check}$ that is set by the next search point set setting unit 212.

The system model setting unit 221 sets a system model or the like for setting an optimal control problem for each search point $\tilde{X}$.

The problem setting calculation unit 222 sets a solution search problem representing task execution by the robot 5, based on the settings made by the system model setting unit 221. The solution search problem referred to here is a problem of finding a solution that satisfies the presented constraint conditions.

Specifically, the problem setting calculation unit 222 sets an optimal control problem that includes constraint conditions relating to the task, constraint conditions such as a constraint condition relating to the operation of the robot, and an evaluation function that indicates the possibility of reaching the target state. An optimal control problem is a problem of determining a control input such that an evaluation indicated by the evaluation function value becomes as high as possible, and can be regarded as an optimization problem.

In the following, an example will be described in which a function where a lower evaluation function value represents a higher evaluation is used as the evaluation function of the optimal control problem. In this case, when solving the optimal control problem, a solution is sought that results in the evaluation function value becoming as small as possible, such as the minimum value of the evaluation function.

However, the learning device 1 may use, as the evaluation function of the optimal control problem, a function in which a larger function value indicates a higher evaluation.

The problem setting calculation unit 222 solves the optimal control problem that has been set, and calculates an output value of the high-level controller $\pi_H$ such that the evaluation function value becomes as small as possible, and the evaluation function value for the output value.

The evaluation function value calculated by the problem setting calculation unit 222 corresponds to an example of information indicating an evaluation of whether or not the operation represented by the search point X˜ can be executed. The problem setting calculation unit 222 corresponds to an example of a calculation means.

The data update unit 223 updates the training data such that the data obtained as a result of the problem setting calculation unit 222 solving the optimal control problem includes the training data of the high-level controller $\pi_H$ and the training data of the level set function. The training data of the high-level controller $\pi_H$ referred to here is training data for the training of the high-level controller $\pi_H$. The training data of the level set function is training data for the training of the level set function. In particular, the parameter value a* to be output by the high-level controller $\pi_H$, which is obtained by solving the optimal control problem, can be used as the training data for the training of the high-level controller $\pi_H$. Furthermore, information relating to whether or not the skill can be executed, which is indicated by the solution of the optimal control problem, can be used as the training data of the level set function. Furthermore, each of the training data includes the search point X˜$_j$.

The training data of the high-level controller $\pi_H$ can be said to be training data for the training of the control of the robot 5, which is performed by the robot controller 3 using the high-level controller $\pi_H$. The data update unit 223 corresponds to an example of a data acquisition means.

The set representing the training data of the high-level controller $\pi_H$ handled by the data update unit 223 is referred to as an obtained data set, and is represented by $D_{opt}$.

The prediction accuracy evaluation function learning unit 230 uses the obtained data set $D_{opt}$ to train the level set function and a prediction accuracy evaluation function, and determines whether or not it is necessary to continue the training of the level set function.

As described above, the level set function is a function that indicates an executable state set, which is a set of combinations of the state and the target state/known task parameter value in which the target state can be reached. The prediction accuracy evaluation function is a function that indicates an evaluation of the estimation accuracy of the combinations of the state and the target state/known task parameter value in which the target state can be reached that have been obtained from the level set function.

The training of the level set function is performed by using, with respect to the search points X˜ that have been selected as the targets of acquiring training data of the high-level controller $\pi_H$, the data used for the training data of the high-level controller $\pi_H$, which is calculated by the problem setting calculation unit 222. There is considered to be a positive correlation between the number of training data acquired by the data update unit 223 and the estimation accuracy of the level set function. The prediction accuracy evaluation function can also be said to be a function that indicates an evaluation of the acquisition status of the training data.

The level set function learning unit 231 trains the level set function using the obtained data set $D_{opt}$. For example, the level set function learning unit 231 determines, for each element of the obtained data set $D_{opt}$, whether or not it is possible to reach the target state based on the evaluation function value calculated by the problem setting calculation unit 222. Then, the level set function learning unit 231 uses information indicating whether or not the target state can be reached, and the combinations of the initial state $x_s$ and the target state/known task parameter value $\beta_g$ as training data, and trains the level set function.

The level set function learning unit 231 corresponds to an example of a level set function learning means.

The prediction accuracy evaluation function setting unit 232 trains the prediction accuracy evaluation function for the level set function trained by the level set function learning unit 231. For example, the prediction accuracy evaluation function setting unit 232 may train the prediction accuracy evaluation function such that, based on a distribution of the search points X˜ subjected to training of the level set function in a candidate space of the search points X˜, the evaluation becomes high in a partial space with a large number of search points X˜ or a partial space with a high density. The prediction accuracy evaluation function setting unit 232 corresponds to an example of a prediction accuracy evaluation function setting means.

The prediction accuracy evaluation function is represented by $J_{g^-}$ or $J_{g\text{-}j}$. Here, "j" is a positive integer representing an identification number that identifies a task. As mentioned above, in a case where the unknown task parameter values of two tasks are different, the control system 100 treats the tasks as separate tasks.

The evaluation unit 233 uses the prediction accuracy evaluation function to determine whether or not it is necessary to continue acquiring the training data of the high-level controller $\pi_H$. The evaluation unit 233 corresponds to an example of an evaluation means.

The information indicating whether or not it is necessary to continue acquiring the training data of the high-level controller $\pi_H$ can be treated as information indicating whether or not it is necessary to continue the training of the level set function.

A flag indicating the determination result of the evaluation unit 233 is also referred to as a learning continuation flag.

In a case where the evaluation unit 233 determines that it is not necessary to continue acquiring the training data of the high-level controller $\pi_H$, the high-level controller learning unit 240 performs the training of the high-level controller $\pi_H$ using the obtained data set $D_{opt}$.

For example, the high-level controller learning unit 240 performs the training of the high-level controller $\pi_H$ such that, in a case where an element among the elements of the obtained data set $D_{opt}$ whose evaluation function value indicates that it is possible to reach the target state is used, and the state represented by the element is input to the high-level controller $\pi_H$, an output value represented by the element is output.

However, the training method of the high-level controller $\pi_H$ performed by the high-level controller learning unit 240 is not limited to a specific method.

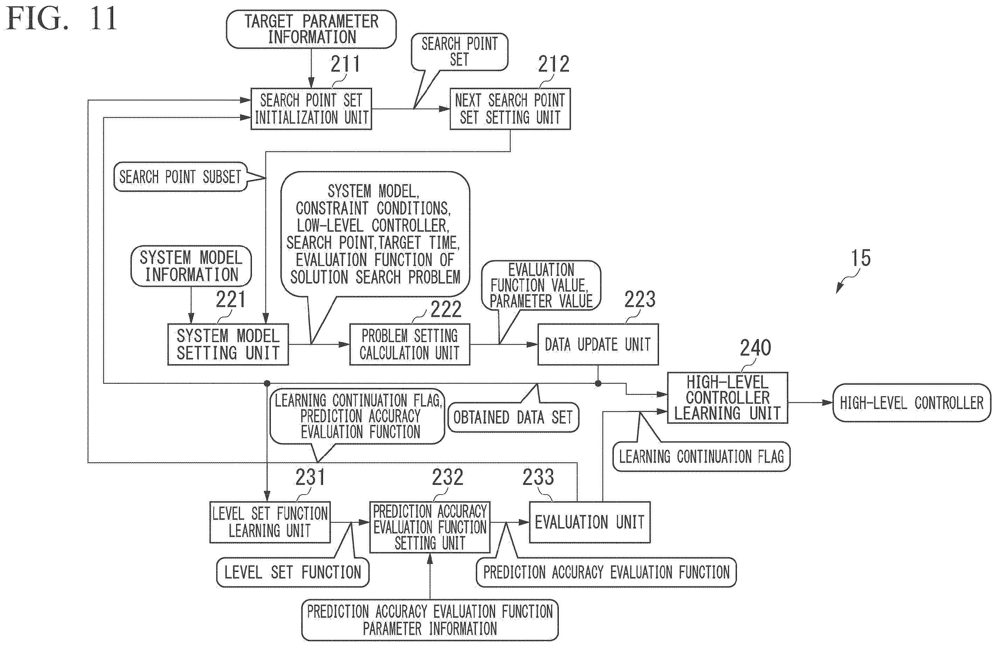

FIG. 11 is a diagram showing an example of data input and output in the skill learning unit 15 according to the first example embodiment.

In the example of FIG. 11, the search point set initialization unit 211 sets the search point set $\tilde{X}_{search}$ using the target parameter information stored in the storage device 2. For example, the search point set initialization unit 211 may set, based on the target parameter information, all possible combinations of the initial state $x_{si}$ and the target state/known task parameter value $\beta_g$ as the elements of the search point set $\tilde{X}_{search}$.

The setting of the search point set $\tilde{X}_{search}$ by the search point set initialization unit 211 corresponds to an initial setting of the search point set $\tilde{X}_{search}$. The search point set $\tilde{X}_{search}$ is updated by the next search point set setting unit 212.

The next search point set setting unit 212 extracts the search point subset $\tilde{X}_{check}$ from the search point set $\tilde{X}_{search}$. Specifically, the next search point set setting unit 212 reads out one or more elements from the search point set $\tilde{X}_{search}$, and sets the elements that have been read out as the elements of the search point subset $\tilde{X}_{check}$. Then, the next search point set setting unit 212 removes the elements that have been read out and set to the search point subset $\tilde{X}_{check}$ from the elements of the search point set $\tilde{X}_{search}$.

In a case where the prediction accuracy evaluation function setting unit 232 has trained the prediction accuracy evaluation function, the next search point set setting unit 212 uses the obtained prediction accuracy evaluation function to set the search point subset $\tilde{X}_{check}$. In particular, the next search point set setting unit 212 sets the elements among the elements of the search point set $\tilde{X}_{search}$ whose prediction accuracy evaluation function value indicates that the estimated accuracy of the level set function is lower than a predetermined condition, as the elements of the search point subset $\tilde{X}_{check}$.

The method of determining whether or not the estimated accuracy is lower than a predetermined condition referred to here is not limited to a specific method. For example, in a case where a larger prediction accuracy evaluation function value represents an evaluation that the accuracy is lower, the estimation accuracy being lower than a predetermined condition may indicate that the prediction accuracy evaluation function value is larger than a predetermined threshold. However, it is not limited to this.

The system model setting unit 221 performs various settings for setting an optimal control problem for each element of the search point subset $\tilde{X}_{check}$. For example, the system model setting unit 221, based on the detailed system model information, the low-level controller information, the target parameter information stored in the storage device 2, and the abstract system model that is set by the abstract system model setting unit 14, sets the low-level controller $\pi_l$, the system model, the constraint conditions relating to the parameters of the system model, and the evaluation function that indicates the possibility of reaching the target state.

The system model referred to here is a model of the target system, such as a motion model of the target system. The constraint conditions relating to the parameters of the system model are constraint conditions on the values that can be taken by the parameters of the system model, such as the constraint conditions of the specifications of the devices included in the target system, and physical constraint conditions. The system model and the constraint conditions relating to the parameters of the system model are used as a portion of the constraint conditions of the optimal control problem handled by the problem setting calculation unit 222.

The system model setting unit 221 outputs the information relating to the low-level controller $\pi_l$, the system model, the parameters of the system model, the evaluation function that indicates the possibility of reaching the target state, the search points $\tilde{X}_i$, and time restrictions at the time of skill execution, such as the execution time T, that have been set, to the problem setting calculation unit 222.

The problem setting calculation unit 222 sets an optimal control problem for each search point $\tilde{X}_i$ based on the information from the system model setting unit 221, and searches for a solution to the optimal control problem that has been set.

As mentioned above, an optimal control problem is, for example, a problem of determining a control input such that the evaluation function value becomes as small as possible. Specifically, the optimal control problem referred to here is a problem of determining a control input such that, given an initial state and an evaluation function, the evaluation function value becomes as small as possible under the constraint conditions of the operation environment and the like.

The problem setting calculation unit 222 sets an evaluation function that indicates the possibility of reaching the target state as the evaluation function of the optimal control problem, and sets various other settings as the constraint conditions of the optimal control problem.

The problem setting calculation unit 222 determines, under the constraint conditions of the optimal control problem, the output value of the high-level controller $\pi_H$ such that the evaluation function value becomes as small as possible. The problem setting calculation unit 222 outputs the combination $(\tilde{X}_i, g^*_i, a^*_i)$ consisting of the search point $\tilde{X}_i$, the output value $a^*_i$ of the high-level controller $\pi_H$ that minimizes the evaluation function value, and the evaluation function value $g^*_i$ at that time, to the data update unit 223.

For example, the problem setting calculation unit 222 may use an evaluation function g in which the state x' is a target state in a case where expression (6) is satisfied, as the evaluation function of the optimal control problem.
[Expression 6]

$$g\left(x', \beta'_g\right) \leq 0 \qquad \cdots (6)$$

The fact that the state x' is the target state in a case where expression (6) is satisfied is expressed as in expression (7).
[Expression 7]

$$x'_d = \left\{x' \middle| g\left(x', \beta'_g\right) \leq 0\right\} \qquad \cdots (7)$$

xa' represents a target state set.
If the mapping from a state x of the detailed system model to a state x' of the abstract system model is represented by $\gamma$, then expression (8) can be obtained from expression (7).
[Expression 8]

$$x_d = \left\{x \middle| g\left(\gamma(x), \beta_g\right) \leq 0\right\} \qquad \cdots (8)$$

Minimizing the value of the evaluation function g in the optimal control problem is expressed as in expression (9).
[Expression 9]

$$g^* = \min_\alpha g\left(\gamma\left(x(T)\right), \beta_g\right) \qquad \cdots (9)$$

As mentioned above, T represents the time required for skill execution. $g(y(x(T)), \beta_g)$ represents the evaluation function value for the state x(T) when the skill is completed. When the evaluation function value becomes 0 or less, it can be determined that the target state can be reached by skill execution.
As mentioned above, $\alpha$ represents the output of the high-level controller $\pi_H$. Expression (9) represents the determination of the output $\alpha$ of the high-level controller $\pi_H$ such that the value of the evaluation function g becomes as small as possible.
The system model of the optimal control problem can be expressed as in expression (10).
[Expression 10]

$$\dot{x} = f\left(x(t), \pi_L\left(x(t), \alpha, \beta_g, \tau_j\right), \beta_g, \tau_j\right) \qquad \cdots (10)$$

As described above, $\tau_j$ represents an unknown task parameter.
The time t is expressed as in expression (11).
[Expression 11]

$$t \in [0, T] \qquad \cdots (11)$$

An inequality constraint condition of the optimal control problem can be expressed as in expression (12).
[Expression 12]

$$c\left(x(t), \pi_L\left(x(t), \alpha, \beta_g, \tau_j\right), \beta_g, \tau_j\right) \leq 0 \qquad \cdots (12)$$

c is a function representing a constraint condition, and is set based on, for example, the target parameter information.

The state at time 0 is the initial state, and is expressed as in expression (13).

[Expression 13]

$$x(0) = x_0 \qquad \cdots (13)$$

The fact that $\gamma$ is a mapping from a state x of the detailed system model to a state x' of the abstract system model can be expressed as in expression (14).

[Expression 14]

$$\gamma(x_0) = x_0' \qquad \cdots (14)$$

The problem setting calculation unit 222 determines, for example, under the constraint conditions from expression (10) to expression (14), the output $a^*$ of the high-level controller such that the value of the evaluation function g shown in expression (9) becomes as small as possible, and the value g * of the evaluation function g at that time. As shown in expression (6), if g" $\leq$ 0, it can be determined that the target state can be reached from the initial state at that time by executing the skill with the output a* of the high-level controller.

The problem setting calculation unit 222 outputs the obtained minimum value g* of the evaluation function and the output a* of the high-level controller at that time, to the data update unit 223, along with the initial state $x_s$ and the target state/known task parameter value $\beta_g$. Alternatively, the problem setting calculation unit 222 may output, to the data update unit 223, information indicating that the target state can be reached in addition to, or instead of, the output $a^*$ of the high-level controller.

The data update unit 223 adds this data in the training data used in the training of the high-level controller $\pi_H$ by the high-level controller learning unit 240.

The method by which the problem setting calculation unit 222 solves the optimal control problem is not limited to a specific method. For example, the problem setting calculation unit 222 may use a known algorithm as a solution search algorithm of the optimal control problem, or a known algorithm as a solution search problem of an optimization problem. Alternatively, the problem setting calculation unit 222 may learn an operation using reinforcement learning or the like in a simulation of the operation of the robot 5 such that the evaluation function value becomes as small as possible.

For example, in a case where the function f in expression (10) is analytically obtained, the problem setting calculation unit 222 is capable of solving the optimal control problem using any type of optimal control algorithm, such as the direct collocation method or differential dynamic programming (DDP).

On the other hand, when the function f is not analytically obtained, such as when a simulator is used as the function f, the problem setting calculation unit 222 is capable of solving the optimal control problem using a black-box optimization method such as path integral control, or a model-free optimization control method. In this case, the problem setting calculation unit 222 determines the control parameter $\alpha$ according to the problem of minimizing the evaluation function g based on the function c representing the constraint conditions.

Here, a specific example of the target parameter information and the low-level controller $\pi_L$ used in the optimal control problem will be described for a case where the skill of a gripping operation is generated in the pick and place task shown in FIG. 6.

Here, "generating a skill" refers to learning the skill of a task that is different from a task whose skills have already been learned. As mentioned above, a different task is a task whose unknown task parameter has a different value.

Here, as the system model shown in expression (10), it is assumed that a physical simulator is used which is based on a state x, an input u to the robot 5, and a contact force F, which is the force with which the gripping target object 6 is gripped. In this case, the expression for determining whether or not the target state can be reached is expressed as in expression (15).

[Expression 15]

$$g(x, F) \leq 0 \qquad \cdots (15)$$

In a case where expression (15) is satisfied, it can be determined that the target state can be reached.

Furthermore, the execution time information of the target parameter information is assumed to include information specifying an upper limit "$T_{max}$" ($T \leq T_{max}$) of the skill execution time T. Moreover, it is assumed that the general constraint condition information of the target parameter information includes information expressing a constraint expression relating to the state x, the input u, and the contact force F as shown in expression (16).

[Expression 16]

$$c(x, u, F) \leq 0 \qquad \cdots \ (16)$$

For example, the constraint expression is an expression that comprehensively expresses the upper limit "$F_{max}$" of the contact force F ($F \leq F_{max}$), the limit "$x_{max}$" of the movable range (or speed) ($|x| \leq x_{max}$), the upper limit "$u_{max}$" of the input u ($|u| \leq u_{max}$), and the like.

Furthermore, it is assumed that the low-level controller $\pi_L$ is, for example, a servo controller using a PID. Here, in a case where the state of the robot 5 is "$x_r$" and the target trajectory of the state of the robot 5 is "$x_{rd}$", the input u is expressed, for example, as in expression (17).

[Expression 17]

$$u = K_p\left(x_r - x_{rd}(t)\right) + K_i \int \left(x_r - x_{rd}(t)\right)dt + K_d\left(\dot{x}_r - \dot{x}_{rd}(t)\right)$$

$$\cdots \ (17)$$

The target trajectory $x_{rd}$ is expressed, for example, as shown in expression (18).

[Expression 18]

$$x_{rd}(t) = \alpha_0 + \alpha_1 t + \alpha_2 t^2 + \alpha_3 t^3 \qquad \cdots \ (18)$$

In expression (17) and expression (18), the control parameter obtained from the output $\alpha$ of the high-level controller $\pi_H$ includes the coefficients of the target trajectory polynomial and the gains of the PID control, and is expressed as in expression (19).

[Expression 19]

$$\alpha = \left[a_0, \cdots, a_3, K_p, K_i, K_d\right] \qquad \cdots \ (19)$$

The problem setting calculation unit 222 solves the optimal control problem and calculates the optimal value ($\alpha^*$) of the control parameter ($\alpha$) shown in expression (19).

The data update unit 223 updates the obtained data set $D_{opt}$ so that ($X^-_i$, $g^*_i$, $\alpha^*_i$) output from the problem setting calculation unit 222 is included in the obtained data set Dopt.

As described above, the level set function learning unit 231 trains the level set function based on the obtained data set $D_{opt}$. The level set function learning unit 231 outputs the acquired level set function to the prediction accuracy evaluation function setting unit 232.

For example, the level set function learning unit 231 compares the evaluation function value indicated in the obtained data set $D_{opt}$ with a predetermined threshold to determine whether or not the target state can be reached from the initial state indicated in the obtained data set $D_{opt}$. In the example of expression (8) and expression (9), the level set function learning unit 231 determines whether or not the target state can be reached based on whether or not the evaluation function value $g^*$ is less than or equal to 0.

Then, the level set function learning unit 231 uses, as the training data, a combination of the state indicated by the obtained data set $D_{opt}$, the target state, and the determination result of whether or not the target state can be reached, and trains the level set function.

Here, a function that outputs the optimal value $g^*$ of the evaluation function g with respect to the initial state $x_0$' in the abstract state and the target state/known task parameter value $\beta_g$ is represented as $g^*(x_0', \beta_g)$. The executable state set $\chi_0$' of the target skill is expressed as in expression (20).

[Expression 20]

$$x_0' = \left\{x_o' \middle| g^*\left(x_0', \beta_g'\right) \leq 0\right\} \qquad \cdots \ (20)$$

The level set function learning unit 231 trains a level set function that represents the executable state set $\chi_0$' based on a plurality of sets including the initial state $x_0$', the target state/known task parameter value $\beta_g$', and the function value $g^*$ included in the obtained data set $D_{opt}$. For example, the level set function learning unit 231 calculates the level set function using a level set estimation method, which is an estimation method using Gaussian process regression based on a Bayesian optimization approach. Here, the level set function is represented by $g_{GP}$.

The level set function $g_{GP}$ may be defined using a mean value function of a Gaussian process obtained through a level set estimation method, or may be defined as a combination of a mean value function and a variance function.

The method by which the level set function learning unit 231 trains a function representing the executable state set is not limited to a specific method. For example, the level set function learning unit 231 may determine the level set function using truncated variance reduction (TruVar), which is an estimation method using a Gaussian process regression in the same manner as the level set estimation method.

As mentioned above, the level set function may be any model that evaluates the initial states from which a desired state can be reached. Furthermore, it can be said that the level set function and the output value $\alpha^*$ of the high-level controller $\pi_H$ are determined based on a set including the initial state $x_0'$, the target state/known task parameter value $\beta_g'$, and the evaluation function value $g^*$. Then, by determining the level set function, because it is possible to evaluate the states that can be reached and the known task parameter value, an effect can be obtained in which it is possible to determine the control parameter that enables a desired state for the system to be reached. Here, the output value $\alpha^*$ of the high-level controller $\pi_H$ corresponds to an example of a control parameter.

Furthermore, the control device of a robot or the like may use a level set function to determine whether or not a desired state can be reached from an initial state given a known task parameter value. Further, if the control device determines that the desired state can be reached, the control device may control the control target, such as a robot, using a control parameter corresponding to the initial state thereof.

In order to reduce the calculation cost of the level set function, the level set function learning unit 231 may acquire a simplified level set function by a polynomial approximation or the like through training. The level set function in this case is represented by $g^\wedge$. $g^\wedge$ is also referred to as a level set approximation function.

The level set function learning unit 231 may train a level set approximation function $g^\wedge$ that satisfies expression (21).

[Expression 21]

$$g_{GP}\left(x_0', \beta_g'\right) \leq \hat{g}\left(x_0', \beta_g'\right) \leq 0 \qquad \cdots (21)$$

As described above, the prediction accuracy evaluation function setting unit 232 sets a prediction accuracy evaluation function that indicates the evaluation of the level set function that is trained by the level set function learning unit 231. The prediction accuracy evaluation function setting unit 232 outputs the obtained prediction accuracy evaluation function to the evaluation unit 233.

For example, the prediction accuracy evaluation function setting unit 232 may train, as the prediction accuracy evaluation function, a function indicating, for the search points $X^\sim$ subjected to training of the level set function, an evaluation of a distribution in a candidate space of the search points $X^\sim$. The candidate space of the search points $X^\sim$ referred to here is a space constituted by the values that may be taken by the search points $X^\sim$. The prediction accuracy evaluation function setting unit 232 may use the space constituted by the domain of the search points $X^\sim$ as the candidate space of the search points $X^\sim$. Alternatively, the candidate space of the search points $X^\sim$ may be the initial value of the search point set $X^\sim_{search}$.

For example, as the prediction accuracy evaluation function, a function may be used that takes the candidates of the search points $X^\sim$ as arguments, and outputs as a function value, an evaluation value that indicates that the possibility of reaching the target state indicated by the level set function can be reached for the candidates of the search points $X^\sim$.

Further, the prediction accuracy evaluation function setting unit 232 may calculate the prediction accuracy evaluation function value so as to indicate a higher evaluation in a case where the number of learned search points $X^\sim$ that are within a predetermined distance from the candidate search points $X^\sim$ input as the arguments to the prediction accuracy evaluation function increases.

Alternatively, as described in the third example embodiment, in a case where a variance of the level set function value is obtained, the prediction accuracy evaluation function setting unit 232 may set the prediction accuracy evaluation function such that the evaluation increases as the variance of the level set function value decreases.

However, the method by which the prediction accuracy evaluation function setting unit 232 trains the prediction accuracy evaluation function is not limited to a specific method.

Hereunder, unless there is a particular need to distinguish between them, the level set function $g_{GP}$ and the level set function $g^\wedge$ will be collectively referred to as the level set function $g^\wedge$.

As described above, the evaluation unit 233 uses the prediction accuracy evaluation function to determine whether or not it is necessary to continue acquiring the training data of the high-level controller $\pi_H$. The evaluation unit 233 sets the determination result to a learning continuation flag.

For example, the evaluation unit 233 may calculate the minimum value of the prediction accuracy evaluation function in the candidate space of the search points X~. The minimum value of the prediction accuracy evaluation function referred to here is the value with the lowest evaluation. Further, in a case where the minimum value of the prediction accuracy evaluation function is evaluated as being lower than a predetermined threshold, the evaluation unit 233 may determine that it is necessary to continue acquiring the training data. On the other hand, in a case where the minimum value of the prediction accuracy evaluation function is evaluated as being higher than the predetermined threshold, the evaluation unit 233 may determine that it is not necessary to continue acquiring the training data.

Alternatively, the evaluation unit 233 may sample prediction accuracy evaluation function values in the candidate space of the search points X~, and determine whether or not it is necessary to continue acquiring the training data, based on the evaluation having the lowest value among the obtained prediction accuracy evaluation function values.

However, the method by which the evaluation unit 233 determines whether or not it is necessary to continue acquiring the training data of the high-level controller $\pi_H$ is not limited to a specific method.

For example, the evaluation unit 233 may determine whether or not it is necessary to continue acquiring the training data, based on a predetermined learning condition in addition to the value of the prediction accuracy evaluation function. The learning condition referred to here can be various conditions. For example, in a case where the number of times the training data has been acquired becomes a predetermined number or more, the evaluation unit 233 may determine that it is not necessary to continue acquiring the training data even if the evaluation indicated by the prediction accuracy evaluation function has not reached a predetermined evaluation.

As mentioned above, in a case where the evaluation unit 233 determines that it is not necessary to continue acquiring the training data of the high-level controller $\pi_H$, the high-level controller learning unit 240 performs the training of the high-level controller $\pi_H$ using the obtained data set $D_{opt}$.

Specifically, the high-level controller learning unit 240 performs the training of the high-level controller $\pi_H$ such that, for an element among the elements of the obtained data set $D_{opt}$ in which it is possible to reach the target state, the high-level controller $\pi_H$ outputs, with respect to an input of the initial state $x_0'$ and the target state/known task parameter value $\beta_g'$ included in the element, an output value $a^*$ included in the element.

The model used at the time the high-level controller learning unit 240 performs the learning of the high-level controller $\pi_H$ can be various models. For example, a neural network, a Gaussian process regression, or a support vector regression may be used. However, it is not limited to this.

(7) Processing Flow

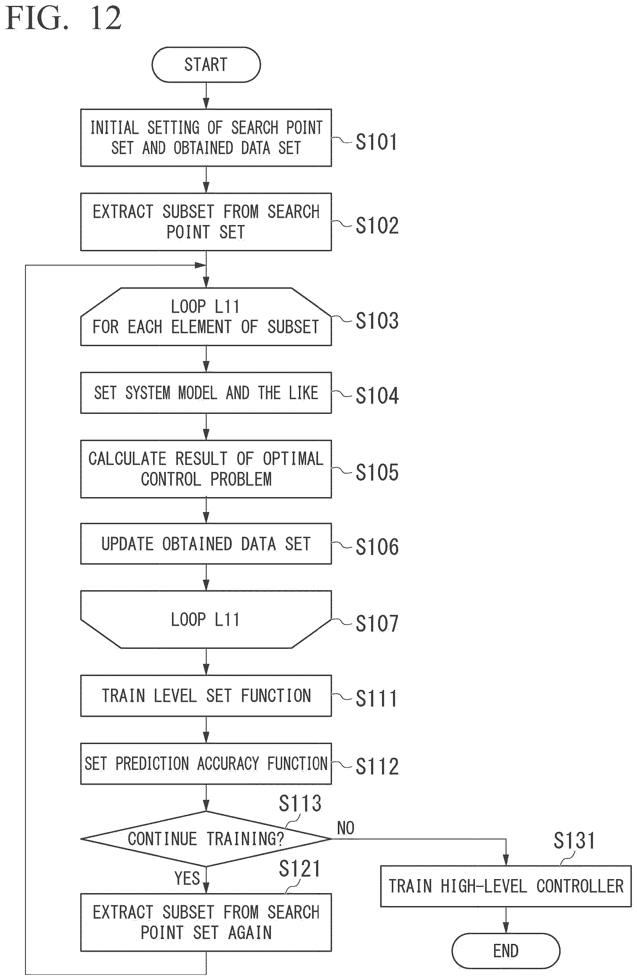

FIG. 12 is a diagram showing an example of update processing of a skill database performed by the learning device 1 according to the first example embodiment. The learning device 1 executes the processing of FIG. 12 with respect to each generated skill.

(Step S101)

The search point set initialization unit 211 performs an initial setting of the search point set $X^{\sim}_{search}$ and the obtained data set $D_{opt}$.

For example, the search point set initialization unit 211 generates the search point set $X^{\sim}_{search}$ by using, as the respective elements of the search point set $X^{\sim}_{search}$, arbitrary combinations of the initial state $x_s$ included in the initial state information, and the target state/known task parameter value $\beta_g$ included in the target state/known task parameter information.

Furthermore, the search point set initialization unit 211 sets the value of the obtained data set $D_{opt}$ to an empty set.

After step 5101, the processing proceeds to step S102.

(Step S102)

The next search point set setting unit 212 extracts a subset from the search point set $X^{\sim}_{search}$. Specifically, the next search point set setting unit 212 sets a subset of the search point set $X^{\sim}_{search}$ as the search point subset $X^{-}_{check}$. Then, the next search point set setting unit 212 excludes each element of the search point subset $X^{\sim}_{check}$ that has been set, from the search point set $X^{\sim}_{search}$.

As shown in expression (22), the search point subset $X^{\sim}_{check}$ has combinations of the initial state $x_{si}$ and the target state/known task parameter value $\beta_{gi}$ as elements.

[Expression 22]

$$\left(x_{si}, \beta_{gi}\right) \in \tilde{X}_{check} \qquad \cdots (22)$$

The processing by which the next search point set setting unit 212 excludes each element of the set subset $\tilde{X}_{check}$ from the search point set $\tilde{X}_{search}$ can be expressed as in expression (23).
[Expression 23]

$$\tilde{X}_{search} \leftarrow \tilde{X}_{search} - \tilde{X}_{check} \qquad \cdots (23)$$

Here, "-" indicates that the subset is excluded from the set.
After step S102, the processing proceeds to step S103.

(Step S103)

The learning device 1 starts loop L11, in which processing is performed for each search point $\tilde{X}$ that is an element of the subset $\tilde{X}_{check}$ of the search point set. In loop L11, the number of repetitions of the loop is represented by "i". Furthermore, the search point $\tilde{X}$ that is currently subjected to processing by loop L11 is also referred to as the target search point $\tilde{X}_i$.
After step S103, the processing proceeds to step S104.

(Step S104)

The system model setting unit 221 performs various settings for setting an optimal control problem based on the target search point $\tilde{X}_i$. For example, the system model setting unit 221 sets the low-level controller $\pi_l$, the system model, the constraint conditions relating to the parameters of the system model, and the evaluation function that indicates the possibility of reaching the target state.
After step S104, the processing proceeds to step S105.

(Step S105)

The problem setting calculation unit 222 sets the optimal control problem based on the settings made by the system model setting unit 221 in step S104. Then, the problem setting calculation unit 222 solves the optimal control problem that has been set, and acquires, as a solution, the output $a^*$ of the high-level controller such that the evaluation function value becomes as small as possible, and the value $g^*$ of the evaluation function g at that time.
After step S105, the processing proceeds to step S106.

(Step S106)

The data update unit 223 updates the obtained data set $D_{opt}$. Specifically, the data update unit 223 adds the combination $(\tilde{X}_i, g^*_i, a^*_i)$ consisting of the ith element $\tilde{X}_i$ of the subset $\tilde{X}_{check}$ of the search point set, the determination result $g^*_i$ indicating whether or not the task succeeded, and the obtained control parameter $a^*_i$ as an element of the obtained data set $D_{opt}$.
The processing by which the data update unit 223 updates the obtained data set $D_{opt}$ is expressed as in expression (24).
[Expression 24]

$$D_{opt} \leftarrow D_{opt} \cup \left\{ \left( \tilde{X}_i, g^*_i, \alpha^*_i \right) \right\} \qquad \cdots (24)$$

"$\{ (\tilde{X}_i, g^*_i, a^*_i) \}$" represents a set consisting of one element having $(\tilde{X}_i, g^*_i, \alpha^*_i)$ as the element.
After step S106, the processing proceeds to step S107.

(Step S107)

The learning device 1 performs termination processing of loop L11.
Specifically, the learning device 1 determines whether or not the processing of loop L11 has been performed with respect to all of the elements in the subset $\tilde{X}_{check}$ of the search point set. If it is determined that there are elements with respect to which the processing of loop L11 has not been performed, the learning device 1 continues to perform the processing of loop L11 with respect to the elements in which the processing of loop L11 has not been executed. In this case, the processing returns to step S103.

On the other hand, if it is determined that the processing of loop L11 has been performed with respect to all of the elements in the subset $X^{\sim}_{check}$ of the search point set, the learning device 1 terminates loop L11. In this case, the processing proceeds to step S111.

(Step S111)

The level set function learning unit 231 trains the level set function $g^{\wedge}$ based on the obtained data set $D_{opt}$.
After step S111, the processing proceeds to step S112.

(Step S112)

The prediction accuracy evaluation function setting unit 232 sets the prediction accuracy evaluation function $J_{g^{\wedge}}$ based on the level set function $g^{\wedge}$.
After step S112, the processing proceeds to step S110.

(Step S113)

The evaluation unit 233 determines whether or not it is necessary to continue the training of the level set function $g^{\wedge}$ based on the prediction accuracy evaluation function $J_g$. The evaluation unit 233 may determine whether or not it is necessary to continue the training of the level set function $g^{\wedge}$ based on a predetermined learning condition in addition to the prediction accuracy evaluation function $J_g$.
If the evaluation unit 233 determines that it is necessary to continue the training of the level set function $g^{\wedge}$ (step S113: YES), the processing proceeds to step S121. On the other hand, if the evaluation unit 233 determines that it is not necessary to continue the training of the level set function $g^{\wedge}$ (step S113: NO), the processing proceeds to step S131.

(Step S121)

The next search point set setting unit 212 once again extracts a subset $X^{\sim}_{check}$ from the search point set $X^{\sim}_{search}$ based on the prediction accuracy evaluation function $J_g$. Specifically, the next search point set setting unit 212 sets the subset $X^{\sim}_{check}$ of the search point set $X^{\sim}_{search}$ based on the prediction accuracy evaluation function $J_g$. Then, the next search point set setting unit 212 excludes each element of the subset $X^{\sim}_{check}$ that has been set, from the search point set $X^{\sim}_{search}$.
After step S121, the processing returns to step S103.

(Step S131)

The high-level controller learning unit 240 performs the training of the high-level controller $\pi_H$ using the obtained data set $D_{opt}$ that has been acquired.
After step S131, the learning device 1 ends the processing of FIG. 12.
As described above, the search point set setting unit 210 selects, from among the search points $(x_s, \beta_g)$ representing an operation of the robot 5, a search point $X^{\sim}$ subjected to training data acquisition for training of a control of the robot 5.
The problem setting calculation unit 222 calculates information indicating an evaluation of whether or not an operation indicated by the selected search point $X^{\sim}$ can be executed, and an output value for the operation indicated by the selected search point $X^{\sim}$ to be output by the high-level controller $\pi_H$ that controls the robot 5.
The data update unit 223 acquires, based on the selected search point $X^{\sim}$, the information indicating an evaluation of whether or not an operation indicated by the selected search point $X^{\sim}$ can be executed, and the output value for the operation indicated by the selected search point $X^{\sim}$ to be output by the high-level controller $\pi_H$, training data for learning a control of the robot 5 that is performed by the high-level controller $\pi_H$.
The evaluation unit 233 determines, based on an evaluation of an acquisition status of the training data, whether or not to continue acquiring the training data.
According to the learning device 1, it is possible to determine whether or not it is necessary to continue the learning of a control of the robot 5, and the learning can be efficiently performed in that unnecessary learning can be eliminated.
Furthermore, the level set function learning unit 231 receives the input of the search point $(x_s, \beta_g)$, and trains the level set function $g^{\wedge}$ which outputs an estimated value of whether or not the operation indicated by the search point $(x_s, \beta_g)$ can be executed, based on the evaluation result from the problem setting calculation unit 222 of whether or not the operation indicated by the search point $(x_s, \beta_g)$ can be executed.

The prediction accuracy evaluation function setting unit 232 receives the input of the search point $(x_s, \beta_g)$, and sets the prediction accuracy evaluation function $J_{g^\wedge}$ that outputs the evaluation value of the estimated accuracy of the level set function $g^\wedge$ for the search point $(x_s, \beta_g)$. The evaluation unit 233 determines, based on the prediction accuracy evaluation function $J_{g^\wedge}$, whether or not to continue acquiring the training data.

According to the learning device 1, it is possible to use the level set function $g^\wedge$ to determine whether or not to continue acquiring the training data. The level set function $g^\wedge$ is used to select a skill when the robot controller 3 controls the robot 5. According to the learning device 1, the amount of work required only to determine whether or not to continue acquiring the training data is relatively small, and in this respect, it is possible to efficiently determine whether or not to continue acquiring the training data.

Furthermore, the search point set setting unit 210 selects, as the target of training data acquisition of the control of the robot 5, a search point $(x_s, \beta_g)$ in which the evaluation value from the prediction accuracy evaluation function $J_{g^\wedge}$ indicates that the estimation accuracy of the level set function $g^\wedge$ is lower than a predetermined condition.

As a result, in the learning device 1, it is possible to acquire training data representing inputs and outputs in which the accuracy of the output of the high-level controller $\pi_H$ is likely to be low, and to efficiently perform the training of the high-level controller $\pi_H$.

Moreover, the search point $(x_s, \beta_g)$ includes a known task parameter, which is a parameter value of a skill in which the operation of the control target has been modularized.

As a result, in the learning device 1, a difference in the operation of the robot 5 that can be expressed by a parameter value, can be represented by the parameter value of the skill, and the learning of a control can be performed by applying the same skill to different operations.

In addition, the search point $(x_s, \beta_g)$ is configured by a combination of; the initial state of the robot 5 and the operation environment at the start of performing a skill, a known parameter value of the skill, and a target state of the robot 5 and the operation environment at the completion of the skill.

As a result, the learning device 1 is capable of performing the training of the high-level controller $\pi_H$ in the abstract space, and it is possible to more efficiently perform the training than in a case where the training of the control corresponding to both the high-level controller $\pi_H$ and the low-level controller $\pi_L$ is performed in real space.

Also, the robot controller 3 includes the high-level controller $\pi_H$ obtained by learning using the training data acquired by the learning device 1.

According to the robot controller 3, at the time of the learning of the robot controller 3, it is possible to determine whether or not it is necessary to continue the learning of a control of the robot 5, and the learning can be efficiently performed in that unnecessary learning can be eliminated.

Furthermore, the robot controller 3 includes the high-level controller $\pi_H$ that controls the robot 5 according to the size of the gripping target object, such that gripping target objects having different sizes are each gripped by the robot 5.

According to the robot controller 3, it is expected that the robot 5 can be controlled with high accuracy according to the size of the gripping target object.

<Second example embodiment>

When the data acquisition unit 220 acquires data, the high-level controller learning unit 240 may perform the training of the high-level controller $\pi_H$ and feedback the learning result. This aspect will be described in the second example embodiment.

The configuration of the control system 100 of the second example embodiment is the same as in the first example embodiment. The second example embodiment will also be described using the configuration of the control system 100 shown in FIG. 1 to FIG. 10.

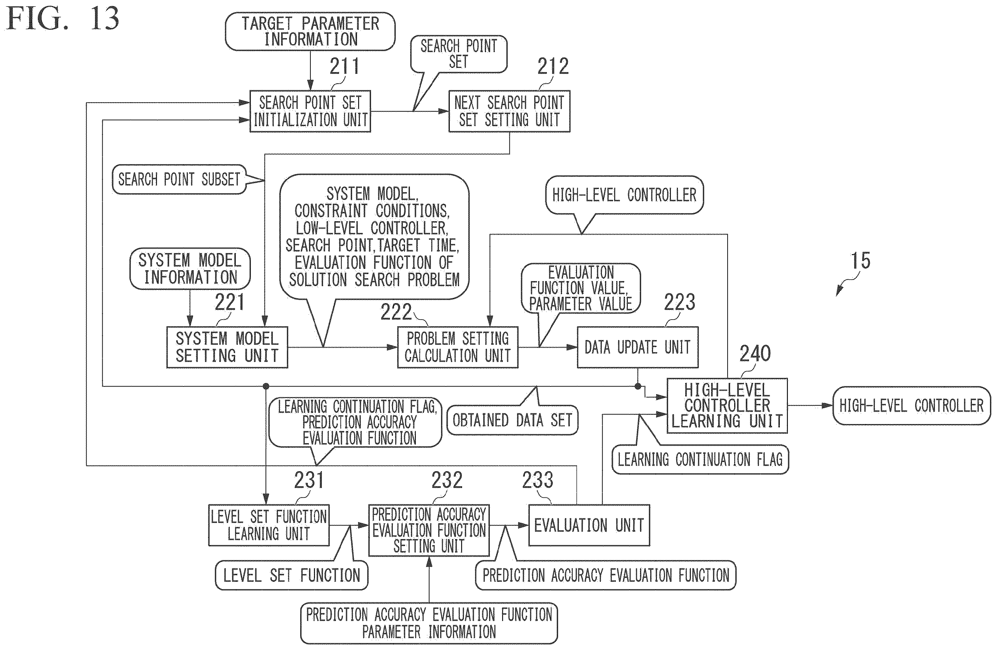

FIG. 13 is a diagram showing an example of data input and output in the skill learning unit 15 according to the second example embodiment. In the second example embodiment, the high-level controller learning unit 240 performs the training of the high-level controller at the time of data acquisition by the data acquisition unit 220, and outputs the high-level controller $\pi^*_{II}$ acquired in the training, to the data acquisition unit 220. The high-level controller can be output by outputting the set value of a parameter of a predictor that constitutes the high-level controller, such as a neural network or a Gaussian process.

In other respects, the data input and output shown in FIG. 13 is the same as the data input and output in the first example embodiment described with reference to FIG. 11.

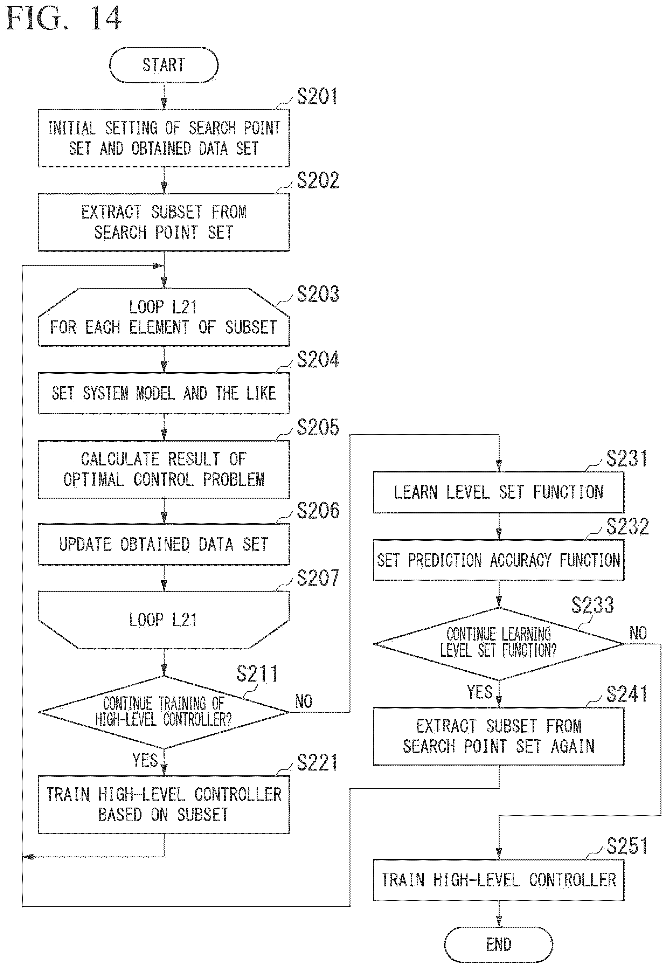

FIG. 14 is a diagram showing an example of update processing of a skill database performed by the learning device 1 according to the second example embodiment. The learning device 1 executes the processing of FIG. 14 with respect to each generated skill.

Steps S201 to S204 in FIG. 14 are the same as steps S101 to S104 in FIG. 12.

The loop from steps S203 to S207 in FIG. 14 is referred to as loop L21.

(Step S205)

In the same manner as described in step S105, the problem setting calculation unit 222 sets an optimal control problem, solves the optimal control problem that has been set, and determines the output of the high-level controller $\pi_H$ such that the evaluation function value becomes as small as possible, and the evaluation function value at that time.

On the other hand, step S205 is different to step S105 in that, in a case where there is a high-level controller $\pi_H$, the problem setting calculation unit 222 determines the output of the high-level controller $\pi_H$ so as to not deviate from the output value of the high-level controller $\pi_H$. For example, the problem setting calculation unit 222 may include, in the evaluation function of the optimal control problem, a term for an error norm between the obtained output value of the high-level controller $\pi_H$ and the output value of the high-level controller $\pi_H$ determined in the optimal control problem. Then, the problem setting calculation unit 222 may determine the solution of the optimal control problem such that the evaluation function value becomes as small as possible. As a result, the problem setting calculation unit 222 makes the value of the original evaluation function as small as possible, and determines a solution such that the output value of the high-level controller $\pi_H$ is close to the obtained output value of the high-level controller $\pi_H$.

Steps S206 and S207 are the same as steps S106 and S107 in FIG. 12.

In step S207, after the learning device 1 terminates loop L21, the processing proceeds to step S211.

(Step S211)

The determination criteria used here by the high-level controller learning unit 240 to determine whether or not it is necessary to continue the training of the high-level controller learning unit $\pi_H$ is not limited to a specific criteria. For example, the high-level controller learning unit 240 may determine that it is not necessary to continue the training of the high-level controller $\pi_H$ if the difference between the output of the high-level controller $\pi_H$ obtained by solving the optimal control problem in step S205 and the output obtained using the high-level controller $\pi_H$ is smaller than a predetermined condition.

In step S211, if the high-level controller learning unit 240 determines that it is necessary to continue the training of the high-level controller $\pi_H$ (step S211: YES), the processing proceeds to step S221.

On the other hand, if the high-level controller learning unit 240 determines that it is not necessary to continue the training of the high-level controller $\pi_H$ (step S211: NO), the processing proceeds to step S231.

(Step S221)

The high-level controller learning unit 240 performs the training of the high-level controller $\pi_H$ using the obtained data set $D_{opt}$. The method by which the high-level controller learning unit 240 performs the training of the high-level controller in step S221 is the same as in step S131 of FIG. 12. Step S221 is different to step S131 in that the obtained data set $D_{opt}$ is still in the process of being generated.

After step S221, the processing returns to step S203.

Steps S231 to S233 are the same as steps S111 to S113 of FIG. 12.

In step S233, if the evaluation unit 233 determines that it is necessary to continue the training of the level set function g^ (step S233: YES), the processing proceeds to step S241. On the other hand, if the evaluation unit 233 determines that it is not necessary to continue the training of the level set function g^ (step S233: NO), the processing proceeds to step S251.

Step S241 is the same as step S121 of FIG. 12. After step S241, the processing returns to step S203.

Step S251 is the same as step 5131 of FIG. 12. After step S251, the learning device 1 terminates the processing of FIG. 14.

<Third example embodiment>

In the third example embodiment, an example will be described of a case where the learning device 1 learns a skill by handling a difference in tasks that is difficult to express using a parameter value.

Specifically, in addition to the learning of the case of the first example embodiment, the learning device 1 learns a meta parameter value for each predictor constituting the level set function and each predictor constituting the high-level controller. When the learning device 1 acquires the training data of a new task and learns a skill for executing the task, the training data that has already been acquired is used to perform the learning and setting of the meta parameter values in advance such that the prediction accuracy of the predictors becomes as high as possible.

The learning device 1 may perform the learning according to the third example embodiment in addition to the learning of the case of the second example embodiment. That is to say, an implementation is possible in which the second example embodiment and the third example embodiment are combined.

**EP 4 488 016 A1**

In the third example embodiment, it is assumed that tasks are generated according to a certain probability distribution, and the correct input and output data of the predictors follows a certain probability distribution that is determined for each task.

The generation of a task that follows a certain probability distribution can be represented by $\tau_j \sim T$. T represents the probability distribution that the task follows. Also, here, $\tau_j$ represents a task.

The fact that the correct input and output data of the predictors follows a certain probability distribution determined for each task can be represented by $S_j \sim D_j$. $D_j$ represents the probability distribution determined according to the task $\tau_j$. $S_j$ represents the correct input and output data of the predictor for the task $\tau_j$.

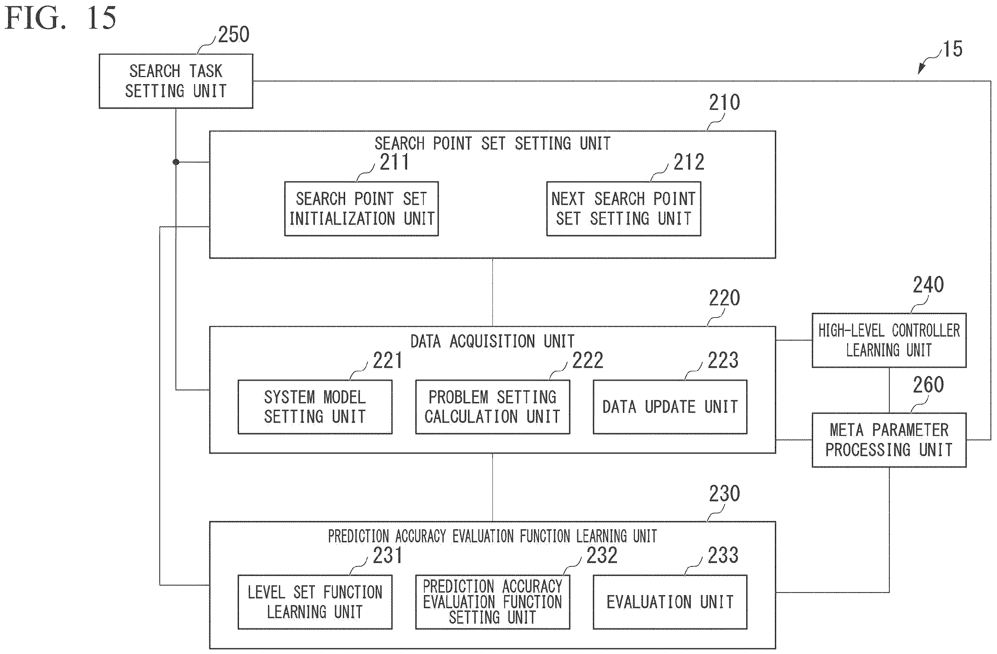

FIG. 15 is a diagram showing an example of a configuration of the skill learning unit 15 according to the third example embodiment. In the configuration shown in FIG. 15, the skill learning unit 15 includes, in addition to each unit shown in FIG. 10, a search task setting unit 250 and a meta parameter processing unit 260.

In all other respects, the configuration of the control system of the third example embodiment is the same as in the first example embodiment. The third example embodiment will also be described using the configuration of the control system 100 shown in FIG. 1 to FIG. 9.

The search task setting unit 250 sets a task subjected to learning by the learning device 1. The task subjected to learning by the learning device 1 that is set by the search task setting unit 250 is also referred to as a search task.

The search task setting unit 250 assumes the probability distribution T that is followed by the task to be generated, and sets the search task based on the assumed probability distribution T. The method by which the search task setting unit 250 assumes the probability distribution T that is followed by the task to be generated is not limited to a specific method. For example, the probability distribution T may be set in advance. However, it is not limited to this.

The meta parameter processing unit 260 learns the meta parameter values of the predictors constituting the level set function and the predictors constituting the high-level controller $\pi_H$, and sets the meta parameter values obtained from the learning to the predictors.

In the third example embodiment, as the predictors constituting the level set function and the predictors constituting the high-level controller $\pi_H$, predictors based on a learning model in which the parameter values are set according to a probability distribution, such as a Bayesian neural network or a Gaussian process, are used. The meta parameter processing unit 260 learns and sets the probability distributions that the parameter values follow, as the meta parameter values.

In addition, the meta parameter processing unit 260 evaluates the prediction accuracy of the predictors to which the meta parameters have been set, and determines whether or not to continue the learning of the meta parameter values based on the evaluation result.

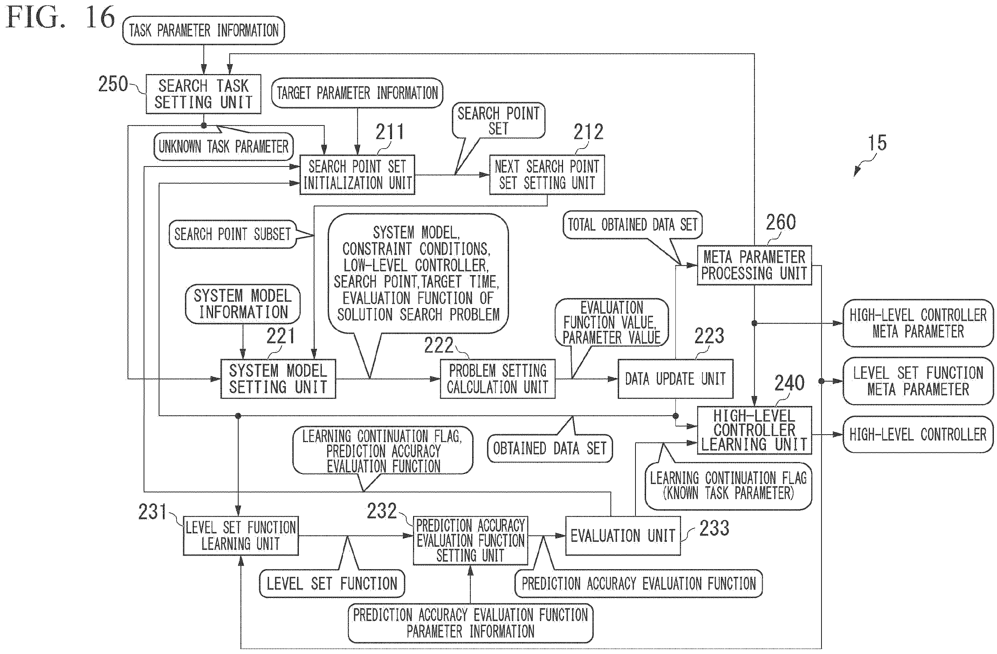

FIG. 16 is a diagram showing an example of data input and output in the skill learning unit 15 according to the third example embodiment. As described with reference to FIG. 15, in the configuration shown in FIG. 16, the skill learning unit 15 includes, in addition to each unit shown in FIG. 11, the search task setting unit 250 and the meta parameter processing unit 260.

The search task setting unit 250 receives the task parameter information and sets the search task. The task parameter information includes information relating to the probability distribution T of the generated task. For example, the task parameter information may be information representing the probability distribution T of the task to be generated, and the search task setting unit 250 may set the search task following the probability distribution T.

The search task setting unit 250 repeats the setting of the search task while a learning continuation flag for the unknown task parameter indicates continuation of the learning. The learning continuation flag for the unknown task parameter is a flag indicating whether or not to continue the learning of the meta parameter values of the predictors. While the learning continuation flag of the unknown task parameter indicates continuation of the learning, the search task setting unit 250 sets the next search task each time the learning device 1 finishes the learning relating to a search task.

In the third example embodiment, the learning continuation flag set by the evaluation unit 233 is also referred to as a learning continuation flag for the known task parameter in order to make a distinction with the learning continuation flag for the unknown task parameter. Furthermore, for the data of each task, "$\tau_j$" or "j" may be written to indicate that the data is for each task.

Each time the search task setting unit 250 sets a search task, the learning device 1 performs the learning of the first example embodiment with respect to the task $\tau_j$ set as the search task. Specifically, the search point set initialization unit 211 sets a search point set $\tilde{X}_{search}$ according to the search task. Furthermore, the system model setting unit 221 performs various settings for setting the optimal control problem according to the search task.

The meta parameter processing unit 260 uses a total obtained data set $D_{optall}$ to learn the meta parameter values mentioned above, and to determine whether or not to continue the learning of the meta parameter values. The total obtained data set $D_{optall}$ is a data set in which all of the obtained data sets $D_{opt,j}$ acquired by the data update unit 223 have been merged.

For example, the data update unit 223 may set the initial value of the total obtained data set $D_{optall}$ to 0 in advance, and each time an obtained data set $D_{opt,j}$ is generated, merge the obtained data set $D_{opt,j}$ that has been generated with the

23

total obtained data set $D_{optall}$.

The processing by which the obtained data set $D_{opt,j}$ is merged with the total obtained data set $D_{optall}$ can be expressed as in expression (25).

[Expression 25]

$$D_{optall} \leftarrow D_{optall} \cup D_{opt,j} \qquad \cdots (25)$$

The meta parameter values learned by the meta parameter processing unit 260 are set to the predictors constituting the level set set and the predictors constituting the high-level controller.

Furthermore, as described above, while the learning continuation flag of the unknown task parameter that is set by the meta parameter processing unit 260 indicates continuation of the learning, the search task setting unit 250 sets the next search task each time the learning device 1 finishes the learning relating to a search task.

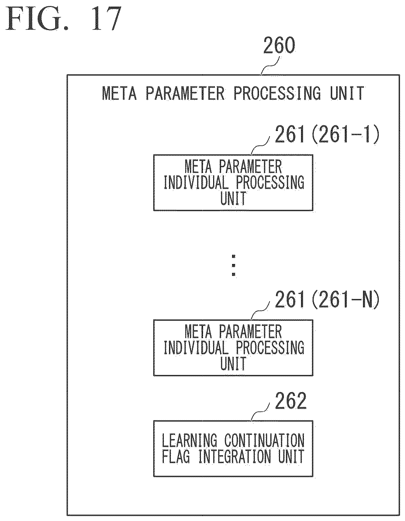

FIG. 17 is a diagram showing an example of a configuration of the meta parameter processing unit 260. In the configuration shown in FIG. 17, the meta parameter processing unit 260 includes meta parameter individual processing units 261 and a learning continuation flag integration unit 262.

The meta parameter processing unit 260 includes a meta parameter individual processing unit 261 for each predictor subjected to learning. In the example of FIG. 16, the level set function and the high-level controller $\pi_H$ are configured using predictors, and are subjected to the learning of the meta parameter values. In this case, the meta parameter processing unit 260 includes two meta parameter individual processing units 261.

However, the number of meta parameter individual processing units 261 included in the meta parameter processing unit 260 is not limited to two. For example, in addition to the level set function and the high-level controller $\pi_H$, there may be other functions that are configured using predictors and subjected to the learning of a meta parameter value. In this case, the meta parameter processing unit 260 may include a meta parameter individual processing unit 261 for each function that is configured using predictors and a meta parameter value that is subjected to learning.

In a case of distinguishing between the individual meta parameter individual processing units 261, the units are represented as a meta parameter individual processing unit 261-1, a meta parameter individual processing unit 261-2, ..., and a meta parameter individual processing unit 261-N. Here, N is a positive integer representing the number of meta parameter individual processing units 261 included in the meta parameter processing unit 260.

The meta parameter individual processing unit 261 performs the learning of the meta parameter values of the predictors. In a case where there are a plurality of meta parameters of the predictors, the meta parameter individual processing units 261 learn the value of each meta parameter.

For example, if the individual predictors are configured using a Bayesian neural network, and have weighting coefficients between nodes and biases for each node as parameters, the probability distribution that each of these parameters follows corresponds to the meta parameter. The meta parameter individual processing units 261 learn the values of each of the meta parameters.

Furthermore, the meta parameter individual processing units 261 set, with respect to the targeted predictors, the value of a learning continuation flag for each predictor, which indicates whether or not it is necessary to continue the learning of the meta parameter value. The learning continuation flag for each predictor is also referred to as an individual learning continuation flag.

The learning continuation flag integration unit 262 integrates the values of the individual learning continuation flags, and sets the value of the learning continuation flag for the unknown task parameter. The learning continuation flag integration unit 262 corresponds to an example of a learning continuation determination integration means.

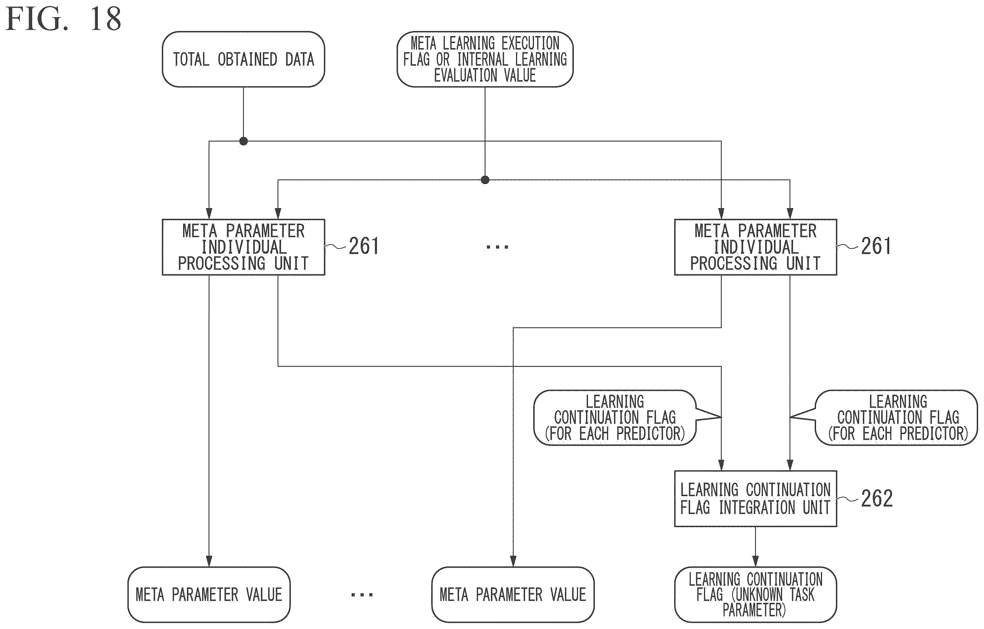

FIG. 18 is a diagram showing an example of data input and output in the meta parameter processing unit 260.

As described above, a meta parameter individual processing unit 261 is provided for each predictor that is a target of the meta parameter processing unit 260. The meta parameter individual processing unit 261 receives an input of the total acquired data $D_{optall}$, and a meta learning execution flag or an internal learning evaluation value, outputs the value of the meta parameter that is the target of the meta parameter individual processing unit 261, and also sets the value of the individual learning continuation flag.

The meta learning execution flag is a flag representing a setting of whether or not to perform learning of the meta parameter value. For example, in a case where more than a predetermined number of data (set elements) of each task is accumulated in the total obtained data set $D_{optall}$, the data update unit 223 may set the value of the meta learning execution flag to a value that indicates that the learning of the meta parameter value is to be performed. Furthermore, when the learning of the meta parameter value is terminated, the meta parameter processing unit 260 may set the value of the meta learning execution flag to a value that indicates that the learning of the meta parameter value is not to be performed.

The internal learning evaluation value is a value representing an evaluation of the prediction accuracy of a predictor. For example, when the learning of the meta parameter value is started, the meta parameter individual processing unit 261 may calculate a generalization error of the meta parameter. The meta parameter processing unit 260 may then calculate, based on the generalization error of the meta parameter, an internal learning evaluation value that represents a comprehensive evaluation of all of the predictors that are subjected to learning of the meta parameter value.

The learning continuation flag integration unit 262 integrates the values of the individual learning continuation flags, and sets the value of the learning continuation flag for the unknown task parameter. For example, if the values of one or more individual learning continuation flags indicate that it is necessary to continue the learning, the learning continuation flag integration unit 262 sets the value of the learning continuation flag for the unknown task parameter to a value indicating that it is necessary to continue the learning. Furthermore, if the values of all of the individual learning continuation flags indicate that it is not necessary to continue the learning, the learning continuation flag integration unit 262 sets the value of the learning continuation flag for the unknown task parameter to a value indicating that it is not necessary to continue the learning.

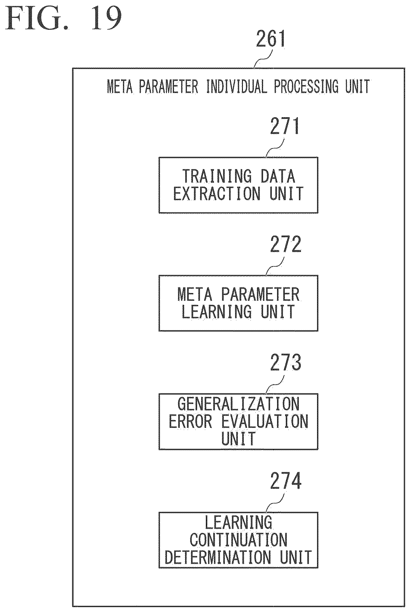

FIG. 19 is a diagram showing a first example of a configuration of the meta parameter individual processing unit 261. In the configuration shown in FIG. 19, the meta parameter individual processing unit 261 includes a training data extraction unit 271, a meta parameter learning unit 272, a generalization error evaluation unit 273, and a learning continuation determination unit 274.

The training data extraction unit 271 extracts training data for learning the meta parameter value, from the total obtained data set $D_{optall}$.

The meta parameter learning unit 272 uses the training data extracted by the training data extraction unit 271 to learn the meta parameter value.

The generalization error evaluation unit 273 calculates an evaluation value for the generalization error of the predictor in a case where the meta parameter value learned by the meta parameter learning unit 272 is used.

The learning continuation determination unit 274 determines whether or not to continue the learning of the meta parameter value, based on the evaluation value calculated by the generalization error evaluation unit 273.

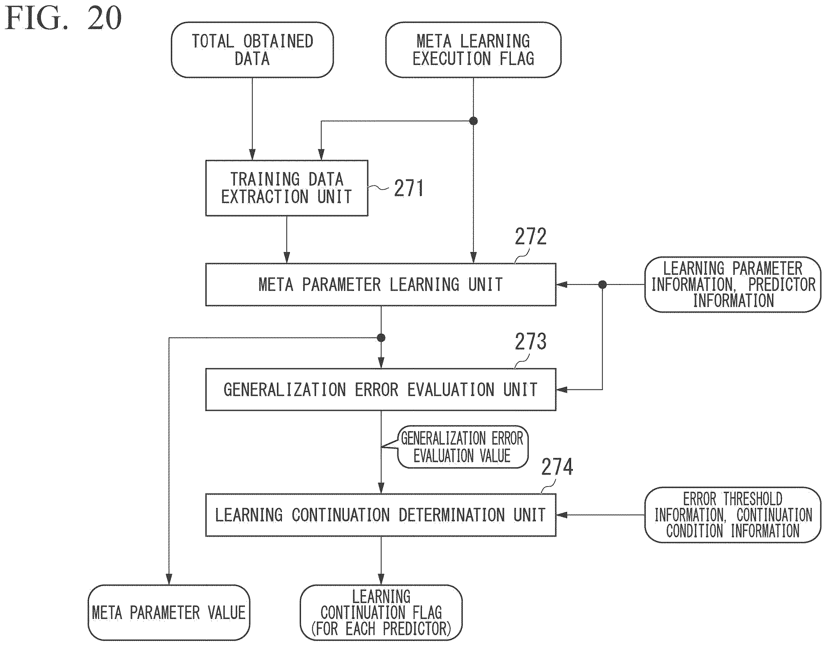

FIG. 20 is a diagram showing an example of data input and output in the meta parameter individual processing unit 261 shown in FIG. 19.

In a case where the value of the meta learning execution flag indicates that the meta parameter value is to be learned, the training data extraction unit 271 extracts the training data for learning the meta parameter value, from the total obtained data set $D_{optall}$. The training data extraction unit 271 repeats the extraction of training data until the value of the meta learning execution flag reaches a value indicating that it is not necessary to continue the learning.

The training data extraction unit 271 corresponds to an example of a training data extraction means.

In a case where the value of the meta learning execution flag indicates that the meta parameter value is to be learned, the meta parameter learning unit 272 learns the meta parameter value based on the training data for learning the meta parameter value, the learning parameter information, and the predictor information. The training data for learning the meta parameter value includes a combination of the input value to the learning model and a correct output value of the learning model for the input value. The meta parameter learning unit 272 corresponds to an example of a learning means.

The predictor information is information relating to a predictor having a meta parameter subjected to learning. For example, the predictor information may include information relating to a function representing the predictor.

The learning parameter information is information relating to the meta parameter subjected to learning. For example, the learning parameter information may include information indicating the number of meta parameters included in the predictor subjected to the learning.

Here, the predictor whose meta parameter value is subjected to learning is expressed by a function f as in expression (26).

[Expression 26]

$$y = f(x, \theta) \qquad \cdots (26)$$

x represents the input to the predictor. $\theta$ represents a parameter of the predictor. y represents the output of the predictor.

The probability distribution p(y|x, $\theta$) of the output of the predictor is expressed as in expression (27).

[Expression 27]

$$p(y|x, \theta) = \int p(y|x, \theta)p(\theta|S)d\theta \approx \frac{1}{N_s} \sum_{i=1}^{N_s} p(y|x, \theta_i) \qquad \cdots (27)$$

25

Ns is a positive integer indicating the number of parameters of the predictor, and is expressed as $\theta = (\theta_1, \theta_2, ..., \theta_{Ns})$.

The value of the parameters $\theta_i$ (i = 1, 2, ..., $N_s$) follows a probability distribution p($\theta$|S) as shown in expression (28).
[Expression 28]

$$\theta_i \sim p(\theta|S) \qquad \cdots \ (28)$$

In the learning of a Bayesian neural network, a conditional probability distribution p($\theta$|S) based on the data S of the parameter $\theta$ is determined.

The method by which the learning device 1 determines the probability distribution p($\theta$|S) is not limited to a specific method. For example, the learning device 1 may use the optimal Gibbs posterior structure shown in expression (29) to obtain the probability distribution p($\theta$|S).
[Expression 29]

$$p(\theta|S) = \frac{P(\theta) \exp\left(-\beta l(S, f(x, \theta))\right)}{\mathbb{E}_{\theta \sim P(\theta)}\left[\exp\left(-\beta l(S, f(x, \theta))\right)\right]} \qquad \cdots \ (29)$$

P($\theta$) represents the prior distribution of the value of the parameter $\theta$. The meta parameter learning unit 272 learns the prior distribution P($\theta$) as the meta parameter value.

$\beta$ is a parameter referred to as a temperature parameter. The value of the temperature parameter $\beta$ is, for example, set in advance.

"1(S, f(x, $\theta$))" represents a loss function 1 based on the difference between the output of the predictor and the correct output value based on correct data S indicated by the training data.

"E" represents the expected value. Specifically, "E$_{\theta \sim P(\theta)}$[exp(-$\beta$1(S, f(x, $\theta$)))]" represents the expected value of "exp(-$\beta$1(S, f(x, $\theta$)))" in a case where the parameter $\theta$ follows the prior distribution P($\theta$).

The meta parameter learning unit 272 performs the learning of the meta parameter value such that, for example, the expected value of the loss function shown in expression (30) becomes as small as possible.
[Expression 30]

$$\mathbb{E}_{D \sim T}\left[\mathbb{E}_{S \sim D}\left[l(S, f_{\theta, P})\right]\right] \qquad \cdots \ (30)$$

"1(S, f$_{\theta, P}$)" in expression (30) represents a loss function 1 similar to "1(S, f(x, $\theta$))" in expression (29). In expression (30), the function f representing the predictor is written as "f$_{0, P}$", which indicates the parameter $\theta$ and the probability distribution P, which is the meta parameter.

As described above, "E" stands for the expected value. Specifically, "E$_{S \sim D}$[1(S, f$_{\theta, P}$)]" represents the expected value of the loss function 1 in a case where the correct data S follows the probability distribution D. "E$_{D \sim T}$[E$_{S \sim D}$[1(S, f$_{\theta, P}$)]]" represents the expected value of "E$_{D \sim T}$[E$_{S \sim D}$[1(S, f$_{\theta, P}$)]]" in a case where the probability distribution D follows the probability distribution T.

For example, the meta parameter learning unit 272 determines the probability distribution Q(P) of the probability distribution P($\theta$) as the meta parameter based on expression (31).
[Expression 31]

$$P(\theta) \sim Q(P) = \frac{\mathcal{P}(P) \exp\left(\frac{\lambda}{N_\tau \beta + \lambda} \sum_{i=1}^{N_\tau} \ln \mathbb{E}_{\theta \sim P(\theta)}\left[\exp\left(-\beta l(S_i, f(x, \theta))\right)\right]\right)}{\mathbb{E}_{P \sim \mathcal{P}}\left[\frac{\lambda}{N_\tau \beta + \lambda} \sum_{i=1}^{N_\tau} \ln \mathbb{E}_{\theta \sim P(\theta)}\left[\exp\left(-\beta l(S_i, f(x, \theta))\right)\right]\right]}$$

$$\cdots \ (31)$$

"P(P)" represents the prior distribution of the probability distribution P($\theta$), which is the meta parameter.

$\lambda$ is a parameter referred to as a temperature parameter. The value of $\lambda$ is, for example, set in advance.

$N_\tau$ is a positive integer representing the number of tasks.

"ln" represents the natural logarithm.

As described above, "E" stands for the expected value. Specifically, "$E_{\theta \sim P(\theta)}[...]$" represents the expected value of the value in brackets ([...]) in a case where the value of the parameter $\theta$ follows the probability distribution $P(\theta)$. "$E_{P \sim P}[...]$" represents the expected value of the value in brackets ([...]) in a case where the probability distribution $P(\theta)$ follows the probability distribution $P(P)$.

The generalization error evaluation unit 273 calculates an evaluation value of the generalization error of a predictor in a case where the probability distributions $P(\theta)$ and $Q(P)$ mentioned above are used. For example, the generalization error evaluation unit 273 calculates an evaluation value of the generalization error $L(Q, T)$ shown in expression (32).

[Expression 32]

$$\mathcal{L}(Q,\mathcal{T}) = \mathbb{E}_{P \sim Q}\left[\mathbb{E}_{D \sim T}\left[\mathbb{E}_{S \sim D}\left[l\left(S, f_{\theta,P}\right)\right]\right]\right] \qquad \cdots (32)$$

As described above, "E" stands for the expected value. Specifically, the right-hand side of expression (32), "$E_{P \sim Q}[E_{D \sim T}[E_{S \sim D}[l(S, f_{\theta,P})]]]$" represents the expected value of "$E_{D \sim T}[E_{S \sim D}[l(S, f_{\theta,P})]]$" shown in expression (30) in a case where the probability distribution $P(\theta)$ follows the probability distribution $Q(P)$.

The generalization error evaluation unit 273 calculates, for example, the value of the right side of expression (33) (the right side of the inequality shown in expression (33)) as the evaluation value of the generalization error $L(Q, T)$.

[Expression 33]

$$\mathcal{L}(Q,\mathcal{T}) \leq -\left(\frac{1}{\lambda} + \frac{1}{N_\tau \beta}\right)$$

$$\ln \mathbb{E}_{P \sim \mathcal{P}}\left[\frac{\lambda}{N_\tau \beta + \lambda}\sum_{i=1}^{N_\tau}\ln \mathbb{E}_{\theta \sim P(\theta)}\left[\exp\left(-\beta l\left(S_i, f(x, \theta)\right)\right)\right]\right] + C(\delta, \lambda, \beta)$$

$$\cdots (33)$$

"$C(\delta, \lambda, \beta)$" is a function determined according to the type of loss function $1(S, f_{\theta, f})$.

The right-hand side of expression (33) represents the upper bound of the generalization error $L(Q, T)$. The right-hand side of expression (33) is also written as $L^{\wedge}(Q, T)$.

The learning continuation determination unit 274 sets the value of the individual learning continuation flag based on the evaluation value $L^{\wedge}(Q, T)$ of the generalization error calculated by the generalization error evaluation unit 273. The learning continuation determination unit 274 may calculate the value of the individual learning continuation flag I based on the expression (34).

[Expression 34]

$$I = \begin{cases} 1 & if \ \hat{\mathcal{L}}(Q, \mathcal{T}) > \epsilon \\ 0 & if \ \hat{\mathcal{L}}(Q, \mathcal{T}) \leq \epsilon \end{cases} \qquad \cdots (34)$$

The value "0" of the individual learning continuation flag I indicates that it is not necessary to continue the learning of the meta parameter value. The value "1" of the individual learning continuation flag I indicates that it is necessary to continue the learning of the meta parameter value.

$\varepsilon$ is a constant representing a predetermined threshold.

The evaluation value $L^{\wedge}(Q, T)$ of the generalization error indicates a smaller value as the evaluation increases. Therefore, in a case where the evaluation value $L^{\wedge}(Q, T)$ is less than or equal to the threshold $\varepsilon$, the learning continuation determination unit 274 determines that it is not necessary to continue the learning of the meta parameter value. On the other hand, in a case where the evaluation value $L^{\wedge}(Q, T)$ is larger than the threshold $\varepsilon$, the learning continuation determination unit 274 determines that it is necessary to continue the learning of the meta parameter value.

The learning continuation determination unit 274 may determine whether or not it is necessary to continue the learning of the meta parameter value, based on information relating to the conditions of continuing the learning. FIG. 20 shows an example in which the learning continuation determination unit 274 acquires error threshold information and continuation condition information as information relating to the conditions of continuing the learning.

The error threshold information is a determination threshold for the evaluation value $L^{\wedge}(Q, T)$ of the generalization error, such as the threshold $\varepsilon$ mentioned above.

The continuation condition information is information indicating a determination method other than the determination based on the evaluation value $L^{\wedge}(Q, T)$ of the generalization error. For example, in a case where the number of times the learning of the meta parameter value is repeated reaches a predetermined number, then even if the evaluation value $L^{\wedge}(Q, T)$ of the generalization error is greater than the threshold $\varepsilon$, the learning continuation determination unit 274 may determine that it is not necessary to continue the learning of the meta parameter value.

However, the method by which the learning continuation determination unit 274 determines whether or not it is necessary to continue the learning of the meta parameter value is not limited to a specific method. The information relating to the conditions of continuing the learning used by the learning continuation determination unit 274 can be various information according to the method used by the learning continuation determination unit 274 to determine whether or not it is necessary to continue the learning the meta parameter value.

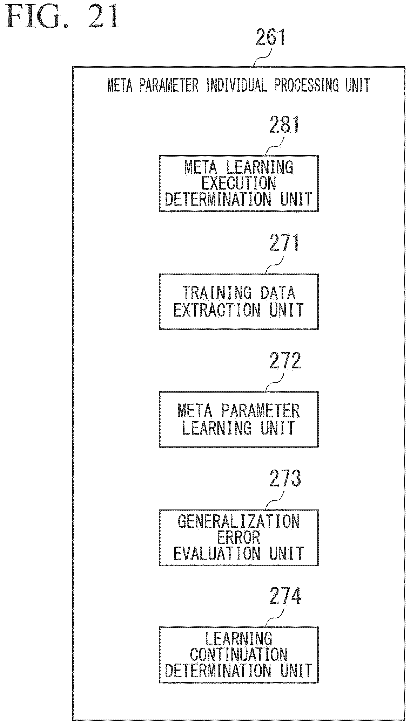

FIG. 21 is a diagram showing a second example of a configuration of the meta parameter individual processing unit 261. In the configuration shown in FIG. 21, the meta parameter individual processing unit 261 includes, in addition to each unit shown in FIG. 19, a meta learning execution determination unit 281.

The meta learning execution determination unit 281 sets the meta learning execution flag.

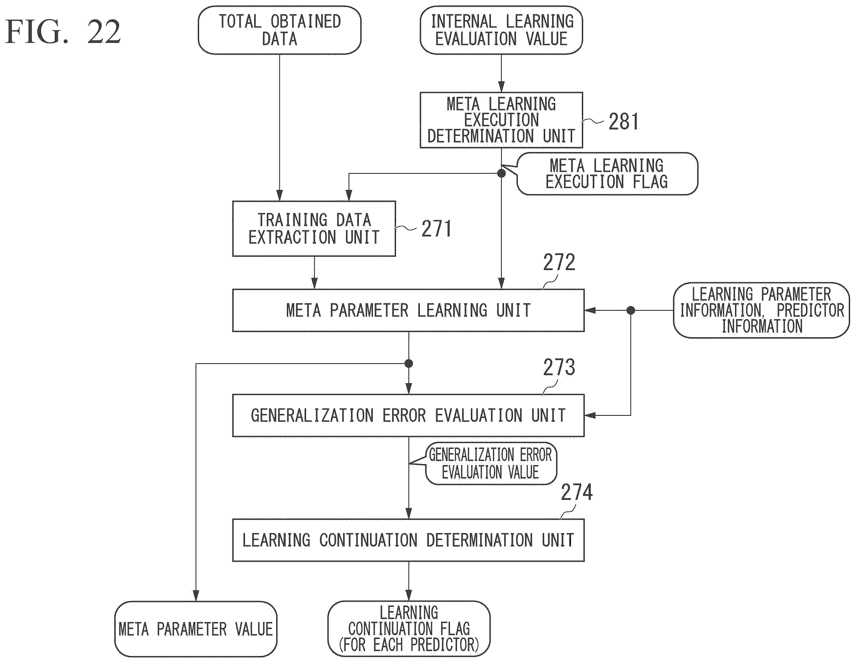

FIG. 22 is a diagram showing an example of data input and output in the meta parameter individual processing unit 261 shown in FIG. 21.

The meta learning execution determination unit 281 sets the value of the meta learning execution flag based on an internal learning evaluation value.

For example, if the evaluation of the prediction accuracy of the predictor indicated by the internal learning evaluation value is lower than a predetermined evaluation, the meta learning execution determination unit 281 sets the value of the meta learning execution flag to a value indicating that learning of the meta parameter value is to be performed. On the other hand, if the evaluation of the prediction accuracy of the predictor indicated by the internal learning evaluation value is higher than a predetermined evaluation, the meta learning execution determination unit 281 sets the value of the meta learning execution flag to a value indicating that learning of the meta parameter value is not to be performed. The meta learning execution determination unit 281 corresponds to an example of a meta learning execution determination means.

In this way, the value of the meta learning execution flag may be set within the learning continuation determination unit 274.

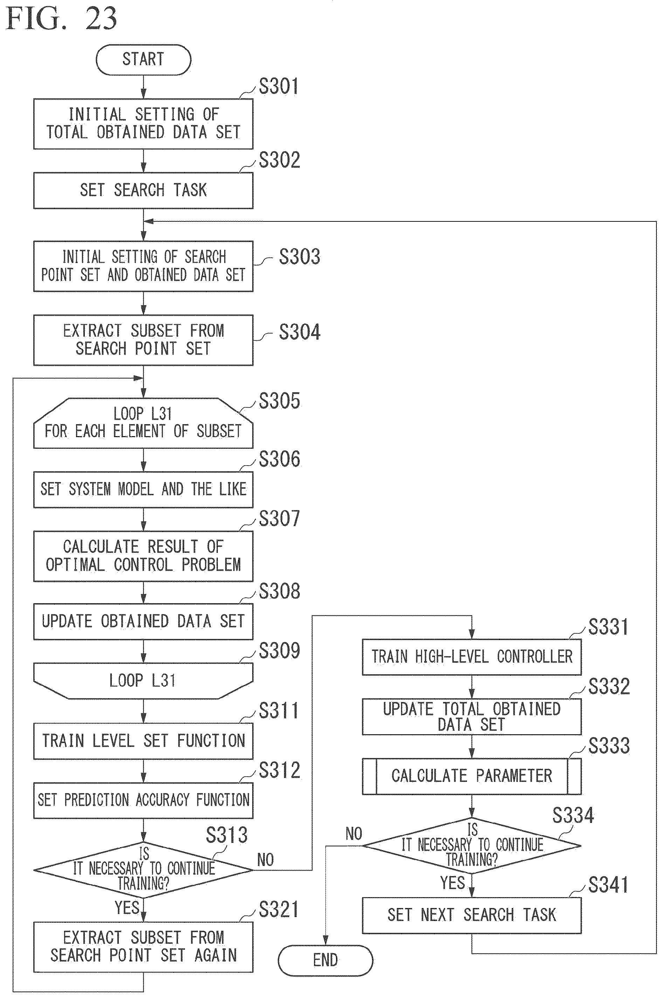

FIG. 23 is a diagram showing an example of update processing of a skill database performed by the learning device 1 according to the third example embodiment. For example, the learning device 1 performs the processing of FIG. 23 in a case of training data of a plurality of skills has been acquired.

(Step S301)

The data update unit 223 performs an initial setting of the total obtained data set $D_{optall}$. Specifically, the data update unit 223 sets the value of the total obtained data set $D_{optall}$ to an empty set.

After step S301, the processing proceeds to step S302.

(Step S302)

The search task setting unit 250 sets a search task. For example, the search task setting unit 250 may select an unknown task parameter value $\tau_j$, and set the task $\tau_j$ associated with the unknown task parameter value $\tau_j$ as the search task.

After step S302, the processing proceeds to step S303.

Steps S303 to S313 in FIG. 23 are the same as steps S101 to S113 in FIG. 12.

The loop from steps S305 to S309 in FIG. 23 is referred to as loop L31.

In step S313, if the high-level controller learning unit 240 determines that it is necessary to continue the training of the high-level controller $\pi_H$ (step S313: YES), the processing proceeds to step S321.

On the other hand, if the high-level controller learning unit 240 determines that it is not necessary to continue the training of the high-level controller $\pi_H$ (step S313: NO), the processing proceeds to step S331.

Step S321 of FIG. 23 is the same as step S121 of FIG. 12.

After step S321, the processing returns to step S305.

Step S331 of FIG. 23 is the same as step S131 of FIG. 12.

After step S331, the processing proceeds to step S332.

(Step S332)

The data update unit 223 updates the total obtained data set $D_{optall}$. As described above, the data update unit 223 joins the generated obtained data set $D_{opt.j}$ with the total obtained data set $D_{optall}$.

After step S332, the processing proceeds to step S333.

(Step S333)

The meta parameter processing unit 260 calculates the meta parameter value of the predictor.

After step S333, the processing proceeds to step S334.

(Step S334)

The meta parameter processing unit 260 determines whether or not it is necessary to continue the learning of the meta parameter value. If the meta parameter processing unit 260 determines that it is necessary to continue the learning (step S334: YES), the processing proceeds to step S341.

On the other hand, if the meta parameter processing unit 260 determines that it is not necessary to continue the learning (step S334 : NO), the learning device 1 terminates the processing of FIG. 23.

(Step S341)

The search task setting unit 250 updates the search task. Specifically, the search task setting unit 250 sets, as the search task, one of the tasks that have not yet been set as the search task.

After step S341, the processing proceeds to step S303.

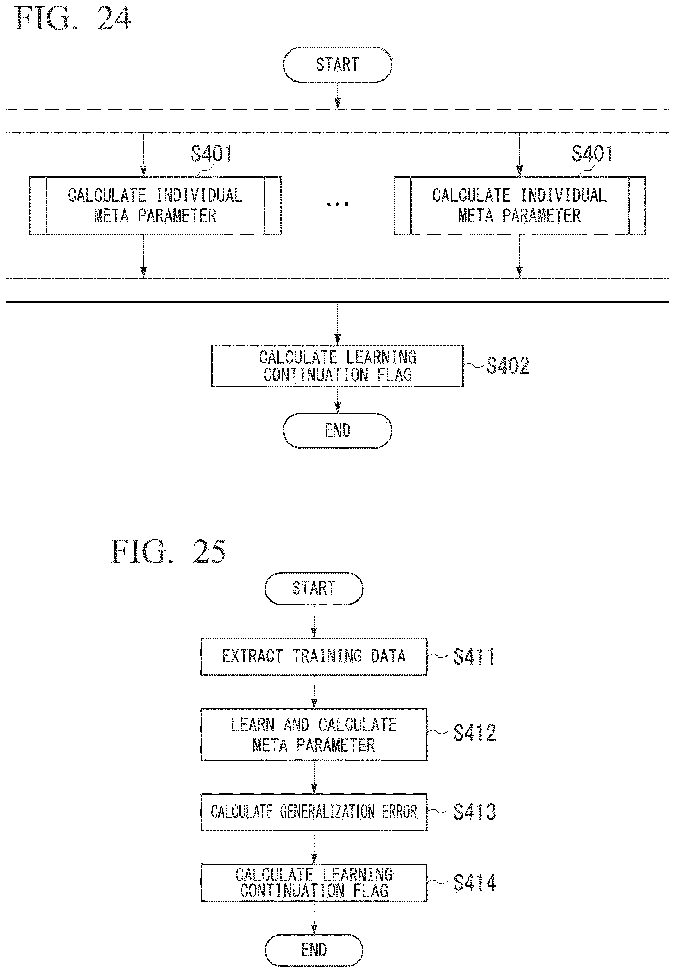

FIG. 24 is a diagram showing an example of the processing by which the meta parameter processing unit 260 calculates the meta parameter value of a predictor. The meta parameter processing unit 260 performs the processing of FIG. 24 in step S333 of FIG. 23.

(Step S401)

The meta parameter individual processing units 261 calculate the meta parameter value of each predictor. Furthermore, the meta parameter individual processing units 261 determine whether or not to continue the learning of the meta parameter value for each predictor.

The meta parameter individual processing units 261 may execute the processing of step S401 for each predictor in parallel. Alternatively, the meta parameter individual processing units 261 may sequentially execute the processing of step S401 for each predictor.

After the processing of step S401 has been completed for all of the predictors targeted for processing, the processing proceeds to step S402.

(Step S402)

The learning continuation flag integration unit 262 determines whether or not it is necessary to continue the learning of the meta parameter value of all of the plurality of predictors, based on the determination result of whether or not it is necessary to continue the learning of the meta parameter value for each predictor.

After step S402, the meta parameter processing unit 260 terminates the processing of FIG. 24.

FIG. 25 is a diagram showing a first example of the processing by which the meta parameter individual processing units 261 calculate the meta parameter value for each predictor, and determine whether or not it is necessary to continue the learning of the meta parameter value. The meta parameter individual processing units 261 perform the processing of FIG. 25 for each predictor in step S401 of FIG. 24.

(Step S411)

The training data extraction unit 271 extracts the training data for learning the meta parameter value, from the total obtained data set $D_{optall}$.

After step S411, the processing proceeds to step S412.

(Step S412)

The meta parameter learning unit 272 performs the learning of the meta parameter value of the predictor targeted for processing.

After step S412, the processing proceeds to step S413.

(Step S413)

The generalization error evaluation unit 273 calculates an evaluation value of the generalization error in a case where the meta parameter value obtained by learning is used.

After step S413, the processing proceeds to step S414.

(Step S414)

The learning continuation determination unit 274 determines whether or not it is necessary to continue the learning of the parameter value, based on the evaluation value of the generalization error.

After step S414, the meta parameter individual processing units 261 terminate the processing of FIG. 25.

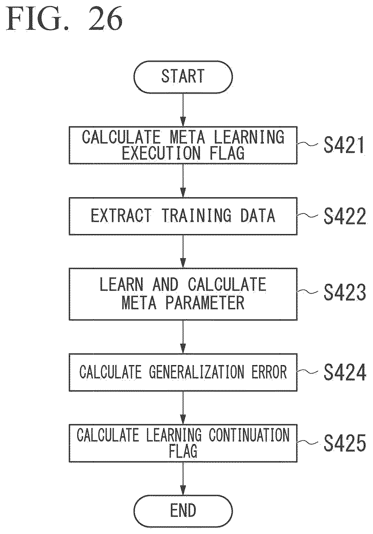

FIG. 26 is a diagram showing a second example of the processing by which the meta parameter individual processing units 261 calculate the meta parameter value for each predictor, and determine whether or not it is necessary to continue the learning of the meta parameter value. The meta parameter individual processing units 261 perform the processing of FIG. 26 instead of the processing of FIG. 25 for each predictor in step S401 of FIG. 24.

(Step S421)

The meta learning execution determination unit 281 sets the value of the meta learning execution flag based on an internal learning evaluation value.

After step S421, the processing proceeds to step S422.

Steps S422 to S425 in FIG. 26 are the same as steps S411 to S414 in FIG. 25.

After step S425, the meta parameter individual processing units 261 terminate the processing of FIG. 26.

A more detailed example of the update processing of the skill database performed by the learning device 1 according to the third example embodiment shown in FIG. 23 will be described.

In step S302, the search task setting unit 250 selects, for example, the shape of a target object for which a gripping operation is to be learned, as the unknown task parameter. The search task setting unit 250 may sample the unknown task parameter following the probability distribution T. Alternatively, the search task setting unit 250 may set the unknown task parameter using an algorithm that probabilistically selects the unknown task parameter.

The same applies to step S341.

In step S303, the search point set initialization unit 211 defines a state variable x representing the position, posture, and the like of the robot 5 and the gripping target object, and sets the state of the robot 5 and the gripping target object before execution of the gripping operation, as the initial state $x_{si}$. Furthermore, the search point set initialization unit 211 sets a target state/known task parameter $\beta_{gi}$ that includes the target state of the robot 5 and the gripping target object after execution of the gripping operation, and the size (scale) of the gripping target object. Then, the search point set initialization unit 211 sets the pair $(x_{si}, \beta_{gi})$ consisting of the initial state $x_{si}$ and a target state/known task parameter $\beta_{gi}$, as an element of the search point set $X^{\sim}_{scarch,j}$.

In step S306, the system model setting unit 221 extracts the search point $X^{\sim}_i$, which is an element of the search point subset $X^{\sim}_{check}$, and sets the system model (dynamics), the constraint conditions of the system model, and the low-level controller $\pi_L$, based on the target state/known task parameter $\beta_{gi}$ and the task $\tau_j$ that have been set. Examples of the constraint conditions referred to here include, but are not limited to, the operating region of the robot 5, upper limit values of inputs in the specifications of the robot 5, constraint conditions to avoid collisions, and the like.

Further, the system model setting unit 221 sets the initial state $x_{si}$ from the search point $X^{\sim}_i$, and $x_{fi}$, included in the target state/known task parameter $\beta_{gi}$.

In addition, the system model setting unit 221 sets the evaluation function g of the optimal control problem based on these values. The system model setting unit 221 may set the evaluation function g shown in expression (35).

[Expression 35]

$$g(x, \beta_{gi}) = \frac{1}{2}\|x - x_{fi}\|^2 - \epsilon_g \qquad \cdots (35)$$

"$\|\cdot\|^2$" represents the square norm.

$\varepsilon_g$ is a tolerance parameter representing the tolerance of the magnitude of the error.

In step S312, the prediction accuracy evaluation function setting unit 232 may set the prediction accuracy evaluation function $J_{g^i}$ shown in expression (36) with respect to a predictor configured using a Bayesian neural network.

[Expression 36]

$$J_{\hat{g}_j}(\tilde{X}) = \mu_{\hat{g}_j}(\tilde{X}) + \gamma \sigma_{\hat{g}_j}(\tilde{X}) \qquad \cdots (36)$$

$\mu_{g^j}(\tilde{X})$ denotes the predicted mean value. $\sigma_{g^j}^2(\tilde{X})$ denotes the prediction variance. These values can be obtained from a Bayesian neural network prediction.

The prediction variance is multiplied by a coefficient $\gamma$, which can be interpreted as a parameter that sets the confidence region (confidence interval).

Alternatively, the prediction accuracy evaluation function setting unit 232 may set a function that calculates an entropy of the level set function $g^{\hat{}}_i$ as the prediction accuracy evaluation function $J_{g^i}$.

In step S313, the evaluation unit 233 calculates the prediction variance $\sigma_{g^j}^2(\tilde{X})$ described above for each element $\tilde{X}$ of the search point set $\tilde{X}_{search,j}$, and determines that it is not necessary to continue the learning if $\sigma_{g^j}^2(\tilde{X}) \leq \varepsilon_\sigma$ holds for all of the elements. $\varepsilon_\sigma$ is a prediction variance threshold. $\varepsilon_\sigma$ is also referred to as a variance threshold parameter. Here, an element $(x_{si}, \beta_{gi})$ of the search point set $\tilde{X}_{search,j}$ is represented as $\tilde{X}$.

Alternatively, if $\sigma_{g^j}^2(\tilde{X}) \leq \varepsilon_\sigma$ holds for all elements of the search point set $\tilde{X}_{search,j}$, or if the number of elements in the obtained data set $D_{opt.j}$ reaches a threshold that has been set, it may be determined that it is not necessary to continue the learning.

As described above, the meta parameter learning unit 272 performs the learning of a meta parameter value that represents a probability distribution in a learning model in which the parameter value follows a probability distribution based on the training data that indicates the input and output in the learning model.

The generalization error evaluation unit 273 calculates an evaluation value indicating an evaluation of the generalization error of the learning model.

The learning continuation determination unit 274 determines whether or not it is necessary to continue the learning of the meta parameter value, based on the evaluation value indicating an evaluation of the generalization error of the learning model.

According to the learning device 1, when the learning of the meta parameter values of a learning model is performed, it is possible to determine whether or not it is necessary to continue the learning, and the learning can be efficiently performed in that unnecessary learning can be eliminated.

Furthermore, the training data extraction unit 271 repeats the selection of the training data to be used for the learning, from among the training data for learning the value of the meta parameters, until it is determined that it is not necessary to continue the learning.

According to the learning device 1, when learning of the meta parameter value of a learning model is performed, it is possible to determine whether or not it is necessary to continue the learning, and the learning can be efficiently performed in that unnecessary learning can be eliminated.

Furthermore, the meta learning execution determination unit 281 determines whether or not to perform the learning of the meta parameter values, based on an evaluation value indicating an evaluation of the generalization error of the learning model.

The training data extraction unit 271 selects the training data in a case where the meta learning execution determination unit 281 determines that learning of the meta parameter values is to be performed.

According to the learning device 1, when the learning of the meta parameter values of a learning model is performed, it is possible to determine whether or not to continue the learning, based on an evaluation of the generalization error of the learning model, and the learning can be efficiently performed in that unnecessary learning can be eliminated.

Moreover, the learning continuation flag integration unit 262 determines whether or not it is necessary to continue the learning of the meta parameter values for all of the plurality of learning models, based on the respective determination results of the plurality of learning continuation determination means corresponding to the plurality of learning models.

According to the learning device 1, it is possible to determine whether or not it is necessary to continue the learning of the meta parameter value for the plurality of learning models, and the learning can be efficiently performed in that unnecessary learning can be eliminated.

In addition, one of the learning models is configured as a high-level controller $\pi_H$ that performs a control of an operation of the robot 5 that causes the robot 5 to execute a modularized task, and the parameter value of the skill is included in the input values to the learning model. The meta parameter learning unit 272 performs the learning of the meta parameter values using the training data of a plurality of skills.

According to the learning device 1, different tasks can be handled by learning the meta parameter values, and a plurality of tasks can be executed by a high-level controller $\pi_H$ based on a single learning model.

Furthermore, the robot controller 3 also includes a high-level controller $\pi_H$ for which learning is performed by the learning device 1.

According to the robot controller 3, different tasks can be handled by setting the meta parameter values, and a plurality of tasks can be executed by a high-level controller $\pi_H$ based on a single learning model.

Furthermore, the robot controller 3 includes the high-level controller $\pi_{II}$ that controls the robot 5 according to the shape of the gripping target object, such that gripping target objects having different shapes are each gripped by the robot 5.

According to the robot controller 3, it is expected that the robot 5 can be controlled with high accuracy according to the shape of the gripping target object.

<Fourth example embodiment>

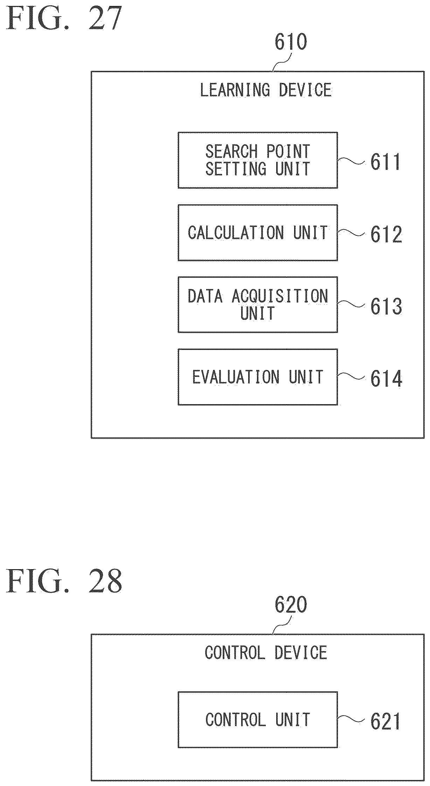

FIG. 27 is a diagram showing an example of a configuration of a learning device according to a fourth example embodiment. In the configuration shown in FIG. 27, the learning device 610 includes a search point setting unit 611, a calculation unit 612, a data acquisition unit 613, and an evaluation unit 614.

In such a configuration, the search point setting unit 611 selects, from among the search points representing an operation of a control target, a search point subjected to training data acquisition for learning of a control of the control target.

The calculation unit 612 calculates information indicating an evaluation of whether or not an operation indicated by the selected search point can be executed, and an output value for the operation indicated by the selected search point to be output by a control means that controls the control target.

The data acquisition unit 613 acquires, based on the selected search point, the information indicating an evaluation of whether or not an operation indicated by the selected search point can be executed, and the output value for the operation indicated by the selected search point to be output by the control means, training data for learning a control of the control target that is performed by the control means.

The evaluation unit 614 determines, based on an evaluation of an acquisition status of the training data, whether or not to continue acquiring the training data.

The search point setting unit 611 corresponds to an example of a search point setting means. The calculation unit 612 corresponds to an example of a calculation means. The data acquisition unit 613 corresponds to an example of a data acquisition means. The evaluation unit 614 corresponds to an example of an evaluation means.

According to the learning device 610, it is possible to determine whether or not it is necessary to continue the learning of a control of a control target, and the learning can be efficiently performed in that unnecessary learning can be eliminated.

<Fifth example embodiment>

FIG. 28 is a diagram showing an example of a configuration of a control device according to a fifth example embodiment. In the configuration shown in FIG. 28, the control device 620 includes a control unit 621.

In such a configuration, the control unit 621 controls a robot according to the size of a gripping target object, such that gripping target objects having different sizes are each gripped by the robot.

According to the control device 620, it is expected that a robot can be controlled with high accuracy according to the size of a gripping target object.

<Sixth example embodiment>

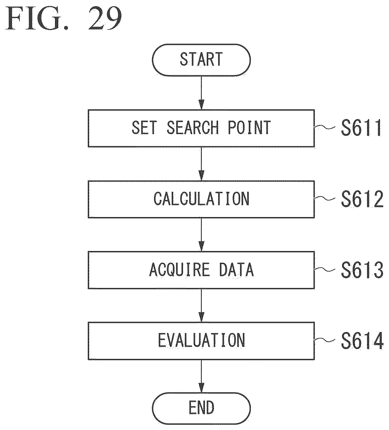

FIG. 29 is a diagram showing an example of the processing of a learning method according to a sixth example embodiment. The learning method shown in FIG. 29 includes the steps of setting a search point (step S611), performing a calculation (step S612), acquiring data (step S613), and performing an evaluation (step S614).

In the step of setting a search point (step S611), a computer selects, from among the search points representing an operation of a control target, a search point subjected to training data acquisition for learning of a control of the control target.

In the step of performing a calculation (step S612), a computer calculates information indicating an evaluation of whether or not an operation indicated by the selected search point can be executed, and an output value for the operation indicated by the selected search point to be output by a control means that controls the control target.

In the step of acquiring data (step S613), a computer acquires, based on the selected search point, the information indicating an evaluation of whether or not an operation indicated by the selected search point can be executed, and the output value for the operation indicated by the selected search point to be output by the control means, training data for learning a control of the control target that is performed by the control means.

In the step of performing an evaluation (step S614), a computer determines, based on an evaluation of an acquisition status of the training data, whether or not to continue acquiring the training data.

According to the learning method shown in FIG. 29, it is possible to determine whether or not to continue the learning of a control of a control target, and the learning can be efficiently performed in that unnecessary learning can be eliminated.

A program for executing some or all of the processing performed by the learning device 1, the robot controller 3, the learning device 610, and the control device 620 may be recorded in a computer-readable recording medium, and the processing of each unit may be performed by a computer system reading and executing the program recorded on the recording medium. The "computer system" referred to here is assumed to include an OS and hardware such as a peripheral device.

Furthermore, the "computer-readable recording medium" refers to a portable medium such as a flexible disk, a magnetic optical disk, a ROM (Read Only Memory), or a CD-ROM (Compact Disc Read Only Memory), or a storage device such as a hard disk built into a computer system. Moreover, the program may be one capable of realizing some of the functions described above. Further, the functions described above may be realized in combination with a program already recorded in the computer system.

Example embodiments of the present invention have been described in detail above with reference to the drawings. However, specific configurations are in no way limited to the example embodiments, and include designs and the like within a scope not departing from the spirit of the present invention.

Industrial Applicability

The present invention may be applied to a learning device, a control device, a learning method, and a recording medium.

Description of Reference Symbols

1, 610 Learning device
2 Storage device
3 Robot controller
4 Measurement device
5 Robot
100 Control system
210 Search point set setting unit
211 Search point set initialization unit
212 Next search point set setting unit
221 System model setting unit
222 Problem setting calculation unit
223 Data update unit
230 Prediction accuracy evaluation function learning unit
231 Level set function learning unit
232 Prediction accuracy evaluation function setting unit
233 Evaluation unit
240 High-level controller learning unit
611 Search point setting unit
612 Calculation unit
613 Data acquisition unit
614 Evaluation unit
620 Control device
621 Control unit

**Claims**

1. A learning device comprising:

a search point setting means for selecting, from among search points indicating an operation of a control target, a search point to be subjected to training data acquisition for learning of a control of the control target;

a calculation means for calculating information indicating an evaluation of whether or not an operation indicated by the selected search point is executable, and an output value for the operation indicated by the selected search point to be output by a control means for controlling the control target;

a data acquisition means for acquiring, based on the selected search point, the information indicating the evaluation of whether or not the operation indicated by the selected search point is executable, and the output value for the operation indicated by the selected search point to be output by the control means, training data for learning a control of the control target that is performed by the control means; and

an evaluation means for determining, based on an evaluation of an acquisition status of the training data, whether or not to continue acquiring the training data.

2. The learning device according to claim 1, comprising:

a level set function learning means for training, based on a result of the evaluation from the calculation means of whether or not the operation indicated by the search point is executable, a level set function that receives an input of a search point and outputs an estimated value of whether or not an operation indicated by the search point is executable; and

a prediction accuracy evaluation function setting means for setting a prediction accuracy evaluation function that receives an input of a search point and outputs an evaluation value of an estimated accuracy of the level set function for the search point,

wherein the evaluation means determines whether or not to continue acquiring the training data, based on the prediction accuracy evaluation function.

3. The learning device according to claim 2, wherein the search point setting means selects, as a target of training data acquisition of a control of the control target, a search point in which an evaluation value from the prediction accuracy evaluation function indicates that an estimation accuracy of the level set function is lower than a predetermined condition.

4. The learning device according to any one of claims 1 to 3, wherein the search points include a parameter value of a skill in which an operation of the control target has been modularized.

5. The learning device according to claim 4, wherein the search points are configured by a combination of: an initial state of the control target and an operation environment of the control target when a skill is started; a parameter value of the skill; and a target state of the control target and the operation environment of the control target when the skill is completed.

6. A control device comprising:
a control means obtained by training using training data acquired by the learning device according to any one of claims 1 to 5.

7. A control device comprising:
a control means that performs a control of a robot according to a shape of a gripping target object, such that gripping target objects having different sizes are each gripped by the robot.

8. A learning method executed by a computer, comprising:

selecting, from among search points indicating an operation of a control target, a search point to be subjected to training data acquisition for learning of a control of the control target;

calculating information indicating an evaluation of whether or not an operation indicated by the selected search point is executable, and an output value for the operation indicated by the selected search point to be output by a control means for controlling the control target;

acquiring, based on the selected search point, the information indicating the evaluation of whether or not the operation indicated by the selected search point is executable, and the output value for the operation indicated by the selected search point to be output by the control means, training data for learning a control of the control target that is performed by the control means; and

determining, based on an evaluation of an acquisition status of the training data, whether or not to continue acquiring the training data.

9. A recording medium that stores a program that causes a computer to execute:

selecting, from among search points indicating an operation of a control target, a search point to be subjected to training data acquisition for learning of a control of the control target;

calculating information indicating an evaluation of whether or not an operation indicated by the selected search point is executable, and an output value for the operation indicated by the selected search point to be output by a control means for controlling the control target;

acquiring, based on the selected search point, the information indicating the evaluation of whether or not the operation indicated by the selected search point is executable, and the output value for the operation indicated by the selected search point to be output by the control means, training data for learning a control of the control target that is performed by the control means; and

determining, based on an evaluation of an acquisition status of the training data, whether or not to continue acquiring the training data.

FIG. 1

100

LEARNING DEVICE — 1

STORAGE DEVICE — 2

ROBOT CONTROLLER — 3

4

ROBOT — 5

EP 4 488 016 A1

FIG. 2

FIG. 3

# FIG. 4

1

LEARNING DEVICE

12

MEMORY

13

INTERFACE

10

PROCESSOR — 11

# FIG. 5

3

ROBOT CONTROLLER

32

MEMORY

33

INTERFACE

30

PROCESSOR — 31

FIG. 6

FIG. 7

FIG. 8

FIG. 9

```
┌─────────────────────────────────┐   ┌─────────────────────────────────┐
│ DETAILED SYSTEM MODEL INFORMATION│   │ LOW-LEVEL CONTROLLER INFORMATION │
└─────────────────────────────────┘   └─────────────────────────────────┘
```

1  11

14
┌─────────────────────────┐
│ ABSTRACT SYSTEM MODEL    │
│ SETTING UNIT             │
└─────────────────────────┘

15
┌─────────────────────────────────────────┐
│ SKILL LEARNING UNIT                      │
└─────────────────────────────────────────┘

16
┌─────────────────────────────────────────┐
│ SKILL TUPLE GENERATION UNIT              │
└─────────────────────────────────────────┘

┌─────────────────────────┐
│ PREDICTION ACCURACY      │
│ FUNCTION, PARAMETER      │
│ INFORMATION              │
└─────────────────────────┘

┌─────────────────────────┐
│ SKILL DATABASE           │
└─────────────────────────┘

**FIG. 10**

SEARCH POINT SET SETTING UNIT — 210

- SEARCH POINT SET INITIALIZATION UNIT — 211
- NEXT SEARCH POINT SET SETTING UNIT — 212

DATA ACQUISITION UNIT — 220

- SYSTEM MODEL SETTING UNIT — 221
- PROBLEM SETTING CALCULATION UNIT — 222
- DATA UPDATE UNIT — 223

PREDICTION ACCURACY EVALUATION FUNCTION LEARNING UNIT — 230

- LEVEL SET FUNCTION LEARNING UNIT — 231
- PREDICTION ACCURACY EVALUATION FUNCTION SETTING UNIT — 232
- EVALUATION UNIT — 233

HIGH-LEVEL CONTROLLER LEARNING UNIT — 240

15

EP 4 488 016 A1

FIG. 11

EP 4 488 016 A1

FIG. 12

```
                    ┌─────────────┐
                    │    START    │
                    └──────┬──────┘
                           │
         ┌─────────────────────────────────┐
         │ INITIAL SETTING OF SEARCH POINT │─── S101
         │   SET AND OBTAINED DATA SET     │
         └─────────────────┬───────────────┘
                           │
         ┌─────────────────────────────────┐
         │  EXTRACT SUBSET FROM SEARCH     │─── S102
         │          POINT SET              │
         └─────────────────┬───────────────┘
                           │
         ┌─────────────────────────────────┐
         │          LOOP L11               │─── S103
         │   FOR EACH ELEMENT OF SUBSET    │
         └─────────────────┬───────────────┘
                           │
         ┌─────────────────────────────────┐
         │   SET SYSTEM MODEL AND THE LIKE │─── S104
         └─────────────────┬───────────────┘
                           │
         ┌─────────────────────────────────┐
         │   CALCULATE RESULT OF OPTIMAL   │─── S105
         │        CONTROL PROBLEM          │
         └─────────────────┬───────────────┘
                           │
         ┌─────────────────────────────────┐
         │    UPDATE OBTAINED DATA SET     │─── S106
         └─────────────────┬───────────────┘
                           │
         ┌─────────────────────────────────┐
         │          LOOP L11               │─── S107
         └─────────────────┬───────────────┘
                           │
         ┌─────────────────────────────────┐
         │    TRAIN LEVEL SET FUNCTION     │─── S111
         └─────────────────┬───────────────┘
                           │
         ┌─────────────────────────────────┐
         │ SET PREDICTION ACCURACY FUNCTION│─── S112
         └─────────────────┬───────────────┘
```

S113

CONTINUE TRAINING?    NO

YES    S121

EXTRACT SUBSET FROM SEARCH POINT SET AGAIN

S131

TRAIN HIGH-LEVEL CONTROLLER

END

FIG. 13

EP 4 488 016 A1

# FIG. 14

START

↓ S201

INITIAL SETTING OF SEARCH POINT
SET AND OBTAINED DATA SET

↓ S202

EXTRACT SUBSET FROM
SEARCH POINT SET

↓ S203

LOOP L21
FOR EACH ELEMENT OF SUBSET

↓ S204

SET SYSTEM MODEL AND THE LIKE

↓ S205

CALCULATE RESULT OF
OPTIMAL CONTROL PROBLEM

↓ S206

UPDATE OBTAINED DATA SET

↓ S207

LOOP L21

↓ S211

CONTINUE TRAINING OF
HIGH-LEVEL CONTROLLER?  — NO

YES ↓ S221

TRAIN HIGH-LEVEL CONTROLLER
BASED ON SUBSET

S231

LEARN LEVEL SET FUNCTION

↓ S232

SET PREDICTION ACCURACY FUNCTION

↓ S233

CONTINUE LEARNING
LEVEL SET FUNCTION?  — NO

YES ↓ S241

EXTRACT SUBSET FROM
SEARCH POINT SET AGAIN

↓ S251

TRAIN HIGH-LEVEL CONTROLLER

↓

END

FIG. 15

SEARCH TASK SETTING UNIT `250`

`15`

SEARCH POINT SET SETTING UNIT `210`

SEARCH POINT SET INITIALIZATION UNIT `211`

NEXT SEARCH POINT SET SETTING UNIT `212`

DATA ACQUISITION UNIT `220`

HIGH-LEVEL CONTROLLER LEARNING UNIT `240`

SYSTEM MODEL SETTING UNIT `221`

PROBLEM SETTING CALCULATION UNIT `222`

DATA UPDATE UNIT `223`

META PARAMETER PROCESSING UNIT `260`

PREDICTION ACCURACY EVALUATION FUNCTION LEARNING UNIT `230`

LEVEL SET FUNCTION LEARNING UNIT `231`

PREDICTION ACCURACY EVALUATION FUNCTION SETTING UNIT `232`

EVALUATION UNIT `233`

EP 4 488 016 A1

FIG. 16

EP 4 488 016 A1

FIG. 17

260

META PARAMETER PROCESSING UNIT

261 (261-1)

| META PARAMETER<br>INDIVIDUAL PROCESSING<br>UNIT |

⋮

261 (261-N)

| META PARAMETER<br>INDIVIDUAL PROCESSING<br>UNIT |

262

| LEARNING CONTINUATION<br>FLAG INTEGRATION UNIT |

FIG. 18

TOTAL OBTAINED DATA

META LEARNING EXECUTION FLAG OR INTERNAL LEARNING EVALUATION VALUE

META PARAMETER INDIVIDUAL PROCESSING UNIT ~261

META PARAMETER INDIVIDUAL PROCESSING UNIT ~261

LEARNING CONTINUATION FLAG (FOR EACH PREDICTOR)

LEARNING CONTINUATION FLAG (FOR EACH PREDICTOR)

LEARNING CONTINUATION FLAG INTEGRATION UNIT ~262

META PARAMETER VALUE

META PARAMETER VALUE

LEARNING CONTINUATION FLAG (UNKNOWN TASK PARAMETER)

EP 4 488 016 A1

FIG. 19

261

META PARAMETER INDIVIDUAL PROCESSING UNIT

271

TRAINING DATA
EXTRACTION UNIT

272

META PARAMETER
LEARNING UNIT

273

GENERALIZATION
ERROR EVALUATION
UNIT

274

LEARNING
CONTINUATION
DETERMINATION UNIT

# FIG. 20

FIG. 21

261

## META PARAMETER INDIVIDUAL PROCESSING UNIT

281

META LEARNING
EXECUTION
DETERMINATION UNIT

271

TRAINING DATA
EXTRACTION UNIT

272

META PARAMETER
LEARNING UNIT

273

GENERALIZATION
ERROR
EVALUATION UNIT

274

LEARNING
CONTINUATION
DETERMINATION UNIT

FIG. 22

TOTAL OBTAINED DATA

INTERNAL LEARNING EVALUATION VALUE

META LEARNING EXECUTION DETERMINATION UNIT — 281

META LEARNING EXECUTION FLAG

TRAINING DATA EXTRACTION UNIT — 271

272

META PARAMETER LEARNING UNIT

LEARNING PARAMETER INFORMATION, PREDICTOR INFORMATION

273

GENERALIZATION ERROR EVALUATION UNIT

GENERALIZATION ERROR EVALUATION VALUE

274

LEARNING CONTINUATION DETERMINATION UNIT

META PARAMETER VALUE

LEARNING CONTINUATION FLAG (FOR EACH PREDICTOR)

EP 4 488 016 A1

# FIG. 23

START

INITIAL SETTING OF
TOTAL OBTAINED DATA SET — S301

SET SEARCH TASK — S302

INITIAL SETTING OF SEARCH
POINT SET AND OBTAINED DATA SET — S303

EXTRACT SUBSET FROM
SEARCH POINT SET — S304

LOOP L31
FOR EACH ELEMENT OF SUBSET — S305

SET SYSTEM MODEL AND THE LIKE — S306

CALCULATE RESULT OF
OPTIMAL CONTROL PROBLEM — S307

UPDATE OBTAINED DATA SET — S308

LOOP L31 — S309

TRAIN LEVEL SET FUNCTION — S311

SET PREDICTION ACCURACY FUNCTION — S312

IS
IT NECESSARY TO CONTINUE
TRAINING? — S313

NO

YES

EXTRACT SUBSET FROM
SEARCH POINT SET AGAIN — S321

TRAIN HIGH-LEVEL CONTROLLER — S331

UPDATE TOTAL OBTAINED
DATA SET — S332

CALCULATE PARAMETER — S333

IS
IT NECESSARY TO CONTINUE
TRAINING? — S334

NO

YES

SET NEXT SEARCH TASK — S341

END

## FIG. 24

```
                          ( START )
                              |
                              v
  _____
  |            |                                     |               |
  |    S401    |                              S401    |               |
  |     v      |                               v      |               |
  | CALCULATE INDIVIDUAL       ...      CALCULATE INDIVIDUAL          |
  |   META PARAMETER                      META PARAMETER              |
  |     |      |                               |      |               |
  |     v      |                               v      |               |
  |_____|
                              |
                              v
                  ┌─────────────────────┐
                  │  CALCULATE LEARNING │─── S402
                  │  CONTINUATION FLAG  │
                  └─────────────────────┘
                              |
                              v
                          (  END  )
```

## FIG. 25

```
                  ( START )
                      |
                      v
          ┌───────────────────────┐
          │  EXTRACT TRAINING DATA │── S411
          └───────────────────────┘
                      |
                      v
          ┌───────────────────────┐
          │   LEARN AND CALCULATE  │── S412
          │     META PARAMETER     │
          └───────────────────────┘
                      |
                      v
          ┌───────────────────────────┐
          │ CALCULATE GENERALIZATION ERROR │── S413
          └───────────────────────────┘
                      |
                      v
          ┌───────────────────────┐
          │   CALCULATE LEARNING   │── S414
          │   CONTINUATION FLAG    │
          └───────────────────────┘
                      |
                      v
                  (  END  )
```

FIG. 26

START

CALCULATE META LEARNING
EXECUTION FLAG — S421

EXTRACT TRAINING DATA — S422

LEARN AND CALCULATE
META PARAMETER — S423

CALCULATE GENERALIZATION ERROR — S424

CALCULATE LEARNING CONTINUATION
FLAG — S425

END

# FIG. 27

610
LEARNING DEVICE

| SEARCH POINT SETTING UNIT | ~ 611 |
| CALCULATION UNIT | ~ 612 |
| DATA ACQUISITION UNIT | ~ 613 |
| EVALUATION UNIT | ~ 614 |

# FIG. 28

620
CONTROL DEVICE

| CONTROL UNIT | ~ 621 |

FIG. 29

START

SET SEARCH POINT ～ S611

CALCULATION ～ S612

ACQUIRE DATA ～ S613

EVALUATION ～ S614

END

## INTERNATIONAL SEARCH REPORT

| International application No. |
| --- |
| **PCT/JP2022/008700** |

### A. CLASSIFICATION OF SUBJECT MATTER

***B25J 13/00***(2006.01)i; ***G06N 20/00***(2019.01)i

FI: G06N20/00 130; B25J13/00 Z

According to International Patent Classification (IPC) or to both national classification and IPC

### B. FIELDS SEARCHED

Minimum documentation searched (classification system followed by classification symbols)

B25J13/00-13/08; G06N20/00; G06N3/08, B25J9/00-9/22; B25J15/00-15/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2021-533478 A (SIEMENS HEALTHCARE DIAGNOSTICS INC.) 02 December 2021 (2021-12-02) <br> entire text, all drawings | 1-6, 8-9 |
| A | JP 2020-522394 A (FRANKA EMIKA GMBH) 30 July 2020 (2020-07-30) <br> entire text, all drawings | 1-6, 8-9 |
| X | JP 2012-24882 A (SEIKO EPSON CORP) 09 February 2012 (2012-02-09) <br> paragraphs [0027], [0038], [0050]-[0051] | 7 |

☐ Further documents are listed in the continuation of Box C.    ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 May 2022** | **24 May 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
| --- |
| **PCT/JP2022/008700** |

**Box No. III    Observations where unity of invention is lacking (Continuation of item 3 of first sheet)**

This International Searching Authority found multiple inventions in this international application, as follows:

(Invention 1) Claims 1-6, 8-9
  Claims 1-6 and 8-9 have the special technical feature of selecting, among search points indicating operation of a control target, a search point from which training data for training controlling of the control target is to be acquired; calculating information indicating evaluation for whether or not the operation indicated by the selected search point is capable of being executed, and an output value for the operation indicated by the selected search point, which is to be output by a control means that controls the control target; acquiring training data for training controlling performed on the control target, and performed by the control means on the basis of the selected search point, the information indicating evaluation for whether or not the operation indicated by the selected search point is capable of being executed, and the output value for the operation indicated by the selected search point, which is to be output by the control means; and determining whether to continue the acquiring of the training data on the basis of evaluation for an acquisition state of the training data, and are thus classified as invention 1.

(Invention 2) Claim 7
  It cannot be said that claim 7 has the technical feature identical or corresponding to claims 1-6 and 8-9 classified as invention 1.
  Claim 7 has the special technical feature in which a robot is controlled according to shapes of gripping objects such that the robot grips objects respectively having different sizes, and is thus classified as invention 2.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**    ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

## INTERNATIONAL SEARCH REPORT
### Information on patent family members

International application No.

**PCT/JP2022/008700**

| Patent document cited in search report | | | Publication date (day/month/year) | Patent family member(s) | | | Publication date (day/month/year) |
|---|---|---|---|---|---|---|---|
| JP | 2021-533478 | A | 02 December 2021 | US 2021/0201151 A1 entire text, all drawings WO 2020/026107 A1 entire text, all drawings EP 3605404 A1 entire text, all drawings CN 112534447 A entire text, all drawings | | | |
| JP | 2020-522394 | A | 30 July 2020 | US 2020/0086480 A1 entire text, all drawings WO 2018/219943 A1 entire text, all drawings CN 110662634 A entire text, all drawings KR 10-2020-0033805 A entire text, all drawings | | | |
| JP | 2012-24882 | A | 09 February 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018219943 A